# EUROPÄISCHE PATENTSCHRIFT

(11) **EP 2 787 709 B1**
(45) Veröffentlichungstag und Bekanntmachung des Hinweises auf die Patenterteilung: **26.12.2018**
(21) Anmeldenummer: 14161877.7
(22) Anmeldetag: 27.03.2014
(51) Int. Cl.: H04L 29/06, H04L 9/32

(54) **VERFAHREN ZUM GEWÄHREN EINES NUTZERZUGRIFFS AUF EIN KOMMUNIKATIONSSYSTEM**
A METHOD OF GRANTING A USER ACCESS TO A COMMUNICATIONS SYSTEM
PROCÉDÉ D'ACCORDER D'UN ACCÈS UTILISATEUR À UN SYSTÈME DE COMMUNICATIONS

(30) Priorität: 04.04.2013 DE 102013103363
(43) Veröffentlichungstag der Anmeldung: 08.10.2014
(73) Patentinhaber: Bundesdruckerei GmbH, 10958 Berlin (DE)
(72) Erfinder: Matejek, Ulrich, 12167 Berlin (DE)
(74) Vertreter: Patentship Patentanwaltsgesellschaft mbH

(56) Entgegenhaltungen:
- US-A1- 2003 172 090
- "Technische Richtlinie eID-Server" In: "Technische Richtlinie eID-Server", 6. Dezember 2011 (2011-12-06), Bundesamt für Sicherheit in der Informationstechnik, Bonn, Germany, XP055059662, Seiten 1-101, * Seite 10, Absatz 2 - Seite 17 * * Seite 48 - Seite 52 * * Seite 61, Absatz 3.5.3 - Seite 63, Absatz 3.5.4 * * Seite 69, Absatz 3.7.2 - Seite 73, Absatz 3.7.4 *
- Anonymous: "BSI TR-03110 Advanced Security Mechanisms for Machine Readable Travel Documents", , 20. März 2012 (2012-03-20), XP055029789, Gefunden im Internet: URL:https://www.bsi.bund.de/ContentBSI/Pub likationen/TechnischeRichtlinien/tr03110/i ndex_htm.html [gefunden am 2012-06-13]

## Beschreibung

Die vorliegende Erfindung betrifft ein Verfahren zum Gewähren eines Nutzerzugriffs auf ein Kommunikationssystem.

Das Dokument "Technische Richtlinie eID Server, 06.12.2011, Seiten 1 - 101" ist eine technische Richtlinie in Bezug auf einen eID Server.

Das Dokument "Advanced Security Mechanisms for Machine Readable Travel Documents - 20.3.2012" ist eine technische Richtlinie im Zusammenhang mit einem elektronisch auslesbaren Personalausweis.

Die Offenlegungsschrift US 2003/172090 A1 beschreibt ein System zur Authentifizierung eines Nutzers gegenüber einem Dienst, der über ein Kommunikationsnetzwerk angeboten wird.

In der Informationstechnik können verschiedene Verfahren zur Authentifizierung eines Nutzers zur Gewährung eines Nutzerzugriffs auf ein Kommunikationssystem zum Einsatz kommen.

Ein übliches Authentifizierungsverfahren basiert beispielsweise auf einer Abfrage eines Benutzernamens sowie eines Kennwortes des Nutzers zur Gewährung des Nutzerzugriffs auf das Kommunikationssystem. Bei diesem Verfahren erweist sich ein langes Kennwort mit vielen verschiedenen Zeichen als besonders vorteilhaft. Kennwörter mit diesen Eigenschaften werden aus Komfortgründen jedoch nur selten von Nutzern eingesetzt.

Weitere Authentifizierungsverfahren basieren beispielsweise auf dem Einsatz von Login-Karten bzw. SmartCards, auf denen ein kryptographischer Schlüssel zur Authentifizierung des Nutzers gespeichert ist. Bei diesen Verfahren erfolgt eine Authentifizierung üblicherweise durch das Einstecken der Login-Karte bzw. der SmartCard in ein Kartenlesegerät. Optional kann hierbei zusätzlich eine persönliche Identifikationsnummer bzw. PIN des Nutzers über ein Tastenfeld des Kartenlesegerätes oder eines PCs eingegeben werden. Diese Verfahren haben den Vorteil, dass lange Kennwörter mit vielen unterschiedlichen Zeichen nicht eingesetzt werden müssen. Die Login-Karten bzw. SmartCards sind jedoch zumeist auf einzelne und spezielle Kommunikationssysteme ausgelegt. Die Einrichtung und Nutzung von Login-Karten bzw. SmartCards zur Gewährung eines Nutzerzugriffs auf das Kommunikationssystem ist zudem aufwändig und kostenintensiv.

Weitere Authentifizierungsverfahren basieren beispielsweise auf einem Abgleich biometrischer Merkmale des Nutzers, wie beispielsweise eines Fingerabdrucks des Nutzers, mit hinterlegten biometrischen Referenzmerkmalen des Nutzers. Diese Verfahren weisen den Vorteil auf, dass eine Authentifizierung des Nutzers zur Gewährung des Nutzerzugriffs auf das Kommunikationssystem einfach erfolgen kann. Der Nachteil dieser Verfahren besteht in der hohen Komplexität biometrischer Merkmale und dem damit verbundenen hohen Aufwand zur Einrichtung und Nutzung dieser Verfahren. Zudem sind diese Verfahren üblicherweise auf einzelne und spezielle Kommunikationssysteme ausgelegt.

Es ist daher die Aufgabe der vorliegenden Erfindung, ein effizientes und kostengünstiges Konzept zum Gewähren eines Nutzerzugriffs auf ein Kommunikationssystem zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die Erfindung basiert auf der Erkenntnis, dass die obige Aufgabe durch den Einsatz eines elektronisch auslesbaren Identifikationsdokumentes des Nutzers gelöst werden kann.

Dadurch wird erreicht, dass für den Nutzer zur Gewährung des Nutzerzugriffs auf das Kommunikationssystem beispielsweise keine Login-Karte bzw. SmartCard produziert bzw. angeschafft werden muss und somit Kosten gespart werden können. Anstelle der Verwendung von Login-Karten bzw. SmartCards wird der Einsatz eines elektronisch auslesbaren Identifikationsdokumentes, beispielsweises eines neuen Personalausweises bzw. nPA, ermöglicht.

Auf Grundlage einer elektronischen Identifikation des Nutzers in Form einer Restricted Identification bzw. RI können dem Nutzer zudem, gemäß einer Ausführungsform, Nutzerzugriffe auf eine Mehrzahl verschiedener Kommunikationssysteme, Applikationen, Diensteanbieter, Login-Server und/oder Applikations-Server mittels des Identifikationsdokumentes ermöglicht werden. Beispielsweise kann ein Nutzer Zugangsrechte für eine Finanzapplikation und eine Geräteverwaltungsapplikation anfordern, wobei die Applikationen in verschiedenen Knoten eines Computer-Netzwerks bzw. eines Cloud-Netzwerks liegen können. Die Applikationen können und dürfen hierbei möglicherweise nichts miteinander zu tun haben, insbesondere nicht hinsichtlich der Klartext-Identität des Nutzers. Gemäß einer Ausführungsform wird ermöglicht, dass sich der Nutzer anonym bei einer Applikation und ebenso anonym, jedoch mit einer anderen elektronischen Identifikation, bei einer anderen Applikation anmelden kann.

Gemäß einem ersten Aspekt betrifft die Erfindung ein Verfahren zum Gewähren eines Nutzerzugriffs auf ein Kommunikationssystem unter Verwendung eines elektronisch auslesbaren Identifikationsdokumentes eines Nutzers, gemäß dem unabhängigen Anspruch 1.

Der Nutzerzugriff kann beispielsweise eine Berechtigung zum Lesen, Schreiben und Verändern elektronischer Daten, beispielsweise elektronischer Dateien, in dem Kommunikationssystem umfassen. Ferner kann der Nutzerzugriff eine Berechtigung zur Ausführung oder Beendigung von Programmen und/oder Prozessen in dem Kommunikationssystem umfassen. Der Nutzerzugriff auf das Kommunikationssystem kann von dem Authentifizierungsserver gewährt oder verwehrt werden.

Das Kommunikationssystem kann beispielsweise durch ein Computernetzwerk und/oder ein Computer-Betriebssystem gebildet sein. Das Kommunikationssystem kann ferner durch eine Client-Server-Architektur mit einer Mehrzahl von Clients und einer Mehrzahl von Servern gebildet sein.

Das Identifikationsdokument des Nutzers ist für eine Authentifizierung des Nutzers zur Gewährung des Nutzerzugriffs auf das Kommunikationssystem ausgelegt. Das Identifikationsdokument verfügt hierfür über eine elektronische Identifikation, welche durch den Identifizierungsserver ausgelesen werden kann.

Das Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ferner einen elektronisch auslesbaren Schaltkreis, beispielsweise einen RFID-Chip umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Die Zugriffsanfrage des Nutzers kann durch eine elektronische Nachricht, einen Befehl, ein Kommando und/oder einen Prozess gebildet sein. Die Zugriffsanfrage des Nutzers kann beispielsweise durch einen Computer, ein Terminal oder ein Client-Terminal erzeugt und übertragen werden.

Der Authentifizierungsserver ist ausgebildet, eine Authentifizierungsanfrage zu erzeugen und an den Identifizierungsserver zu übertragen. Der Authentifizierung ist ferner ausgebildet, die übermittelte elektronische Identifikation mit einer vorgespeicherten elektronischen Identifikation zu vergleichen. Gemäß einer Ausführungsform kann der Authentifizierungsserver für eine Verwaltung einer Mehrzahl vorgespeicherter elektronischer Identifikationen vorgesehen sein.

Die Authentifizierungsanfrage kann durch eine elektronische Nachricht, einen Befehl, ein Kommando und/oder einen Prozess gebildet sein. Die Authentifizierungsanfrage kann beispielsweise durch den Authentifizierungsserver erzeugt und übertragen werden.

Der Identifikationsserver ist ausgebildet, die elektronische Identifikation aus dem Identifikationsdokument des Nutzers auszulesen und an den Authentifizierungsserver zu übertragen. Gemäß einer Ausführungsform ist der Identifikationsserver ausgebildet, die Echtheit des Identifikationsdokumentes zu verifizieren. Gemäß einer Ausführungsform ist der Identifikationsserver ein eID-Server.

Die elektronische Identifikation kann in dem Identifikationsdokument gespeichert sein. Gemäß einer Ausführungsform kann die elektronische Identifikation durch das Identifikationsdokument erzeugt werden. Die elektronische Identifikation kann durch eine Folge von Buchstaben, Ziffern, Bytes und/oder Symbolen gebildet sein.

Das Übertragen der Zugriffsanfrage kann das Aussenden der Zugriffsanfrage sowie das Empfangen der Zugriffsanfrage über ein Kommunikationsnetzwerk umfassen. Das Übertragen der Zugriffsanfrage kann ferner den Aufbau sowie das Schließen einer verschlüsselten und/oder authentisierten Verbindung umfassen.

Das Übertragen der Authentifizierungsanfrage kann das Aussenden der Authentifizierungsanfrage sowie das Empfangen der Authentifizierungsanfrage über ein Kommunikationsnetzwerk umfassen. Das Übertragen der Authentifizierungsanfrage kann ferner den Aufbau sowie das Schließen einer verschlüsselten Verbindung umfassen.

Das Auslesen der elektronischen Identifikation kann den Austausch und/oder die Übertragung von kryptographischen Zertifikaten und/oder kryptographischen Schlüsseln umfassen. Ferner kann das Auslesen der elektronischen Identifikation eine Verifikation der Echtheit des Identifikationsdokumentes und/oder der elektronischen Identifikation umfassen.

Das Vergleichen der übermittelten elektronischen Identifikation mit einer vorgespeicherten elektronischen Identifikation kann den Abgleich der übermittelten elektronischen Identifikation mit einer Datenbank umfassen, welche eine Mehrzahl vorgespeicherter elektronischer Identifikationen umfasst. Gemäß einer Ausführungsform kann die Datenbank durch einen Speicher des Authentifizierungsservers gebildet sein. Gemäß einer Ausführungsform kann das Vergleichen der übermittelten elektronischen Identifikation mit einer vorgespeicherten elektronischen Identifikation von einem Prozessor des Authentifizierungsservers durchgeführt werden.

Gemäß einer Ausführungsform kann das Verfahren durch ein Computerprogramm, beispielsweise einen eID-Client bzw. eine AusweisApp, realisiert werden.

Gemäß einer Ausführungsform wird die elektronische Identifikation durch das Identifikationsdokument unter Verwendung eines öffentlichen kryptographischen Schlüssels des Authentifizierungsservers erzeugt.

Dadurch wird erreicht, dass die elektronische Identifikation spezifisch für den Authentifizierungsserver erzeugt werden kann. Ferner kann auf diese Weise eine pseudonyme elektronische Identifikation des Identifikationsdokumentes erzeugt werden.

Gemäß einer Ausführungsform gehört der öffentliche kryptographische Schlüssel dem Diensteanbieter, beispielsweise dem Unternehmen, das die Login-Lösung nutzt. Gemäß einer Ausführungsform wird er aber ausschließlich durch den Identifizierungsserver verwaltet und verwendet. Gemäß einer Ausführungsform wird er auch nur dort erzeugt und gespeichert.

Die elektronische Identifikation kann beispielsweise auf Grundlage eine Diffie-Hellman-Verfahrens und/oder eines Diffie-Hellman-Schlüsselaustausches erzeugt werden.

Gemäß der Erfindung umfasst das Verfahren Übertragen des öffentlichen kryptographischen Schlüssels des Authentifizierungsservers von dem Authentifizierungsserver zu dem Identifikationsdokument; Erzeugen der elektronischen Identifikation durch eine Verknüpfung des öffentlichen kryptographischen Schlüssels des Authentifizierungsservers und eines privaten kryptographischen Schlüssels des Identifikationsdokumentes durch das Identifikationsdokument; und Speichern der erzeugten elektronischen Identifikation, um die vorgespeicherte elektronische Identifikation zu erhalten.

Dadurch wird erreicht, dass die elektronische Identifikation durch das Identifikationsdokument selbst erzeugt werden kann, und der Erzeugungsvorgang durch keine weiteren Einflussgrößen beeinflusst wird. Maßgebliche Einflussgrößen können beispielsweise sein: PuK des Diensteanbieters, PrK des ID-Dokuments sowie verwendete Algorithmen, wie beispielsweise der Hash-Algorithmus.

Der öffentliche kryptographische Schlüssel des Authentifizierungsservers kann Teil eines kryptographischen Schlüsselpaares sein und gemäß einer Public-Key-Infrastruktur erzeugt worden sein. Der private kryptographische Schlüssels des Identifikationsdokumentes kann Teil eines kryptographischen Schlüsselpaares sein und gemäß einer Public-Key-Infrastruktur erzeugt worden sein.

Die Verknüpfung des öffentlichen kryptographischen Schlüssels des Authentifizierungsservers und eines privaten kryptographischen Schlüssels des Identifikationsdokumentes durch das Identifikationsdokument kann eine Anwendung binärer Operatoren, beispielsweise einer Negation oder einer Exklusiv-ODER-Verknüpfung umfassen. Ferner kann die Verknüpfung kryptographische Algorithmen, wie beispielsweise Advanced Encryption Standard (AES), oder Algorithmen zur Hashwertbildung, wie beispielsweise Secure Hash Algorithm (SHA), umfassen. Ferner kann die Verknüpfung eine Berechnung von Prüfsummen des öffentlichen kryptographischen Schlüssels des Authentifizierungsservers und/oder des privaten kryptographischen Schlüssels des Identifikationsdokumentes umfassen.

Gemäß einer Ausführungsform umfasst das Verfahren ferner ein Übertragen des öffentlichen kryptographischen Schlüssels des Authentifizierungsservers zu dem Identifizierungsserver oder ein Auslesen des öffentlichen kryptographischen Schlüssels des Authentifizierungsservers aus einem Speicher des Identifizierungsservers; und ein Übertragen des öffentlichen kryptographischen Schlüssels des Authentifizierungsservers von dem Identifizierungsserver zu dem Identifikationsdokument.

Dadurch wird erreicht, dass der öffentliche kryptographische Schlüssel des Authentifizierungsservers dem Identifizierungsserver bereitgestellt werden kann.

Der Speicher des Identifizierungsservers kann beispielsweise durch eine elektronische Speicherbaugruppe realisiert sein. Der Speicher des Identifizierungsservers kann ferner eine Datenbank umfassen, welche ausgebildet ist, eine Mehrzahl unterschiedlicher öffentlicher kryptographischer Schlüssel einer Mehrzahl unterschiedlicher Authentifizierungsserver zu speichern.

Das Auslesen des öffentlichen kryptographischen Schlüssels des Authentifizierungsservers aus dem Speicher des Identifizierungsservers kann einen Zugriff auf die elektronische Speicherbaugruppe oder die Datenbank umfassen. Ferner kann das Auslesen des öffentlichen kryptographischen Schlüssels des Authentifizierungsservers aus dem Speicher des Identifizierungsservers eine Suche in der Datenbank sowie die Extraktion des öffentlichen kryptographischen Schlüssels des zugehörigen Authentifizierungsservers aus der Datenbank umfassen.

Gemäß einer Ausführungsform wird der Nutzerzugriff bei einer Übereinstimmung zwischen der übermittelten elektronischen Identifikation und der vorgespeicherten elektronischen Identifikation gewährt, oder wird der Nutzerzugriff bei einem Mangel an Übereinstimmung zwischen der übermittelten elektronischen Identifikation und der vorgespeicherten elektronischen Identifikation verwehrt.

Dadurch wird erreicht, dass ein Zugriff auf das Kommunikationssystem nur dann gewährt wird, wenn die übermittelte elektronische Identifikation mit der vorgespeicherten elektronischen Identifikation übereinstimmt. Somit kann sichergestellt werden, dass nur authentisierten Nutzern ein Zugriff auf das Kommunikationssystem gewährt wird.

Die Übereinstimmung zwischen der übermittelten elektronischen Identifikation und der vorgespeicherten elektronischen Identifikation kann beispielsweise dann gegeben sein, wenn die übermittelte elektronische Identifikation und der vorgespeicherten elektronischen Identifikation identisch ist.

Gemäß einer Ausführungsform wird die übermittelte elektronische Identifikation mit einer Mehrzahl von vorgespeicherten elektronischen Identifikationen unterschiedlicher Identifikationsdokumente verglichen.

Dadurch wird erreicht, dass sich mehrere Nutzer des Kommunikationssystems jeweils mittels einer elektronischen Identifikation identifizieren können.

Gemäß einer Ausführungsform ist die jeweilige elektronische Identifikation eine Restricted Identification. Die Restricted Identification kann beispielsweise gemäß der Richtlinie TR-03110 erzeugt oder bereitgestellt werden.

Dadurch wird erreicht, dass der Nutzer Zugriff auf mehrere Kommunikationssysteme zur gleichen Zeit erlangen kann, wobei die jeweiligen elektronischen Identifikationen unterschiedlich sein können.

Gemäß einer Ausführungsform ist die Restricted Identification eine eindeutige und pseudonyme elektronische Identifikation des Nutzers. Die Eindeutigkeit kann sich beispielsweise auf ein Einsatzszenario des Identifikationsdokumentes beziehen. Falls die Restricted Identification oder das Verfahren beispielsweise bei zwei unterschiedlichen Unternehmen eingesetzt wird, so kann das Identifikationsdokument oder der Ausweis in beiden Fällen unterschiedliche elektronische Identifikationen oder IDs generieren.

Die Erzeugung der Restricted Identification kann durch eine kryptographische Verknüpfung eines öffentlichen kryptographischen Schlüssels des jeweiligen Authentifizierungsservers und eines privaten kryptographischen Schlüssels des Identifikationsdokumentes erfolgen. Die Erzeugung der Restricted Identification kann ferner eine Hashwert-Bildung umfassen. Die Restricted Identification kann gemäß der Richtlinie BSI TR-3110 erzeugt werden oder vorliegen.

Gemäß einer Ausführungsform ist die Zugriffsanfrage eine Login-Anfrage.

Dadurch wird erreicht, dass der Nutzer Zugriff auf ein Kommunikationssystem, Computer-Betriebssystem und/oder ein Computer-Netzwerk erlangen kann, welches mittels eines Logins und/oder eines Einbuchens einen Zugriff ermöglicht.

Die Login-Anfrage kann beispielsweise ein Einbuchen des Nutzers in ein Kommunikationssystem, Computer-Betriebssystem und/oder ein Computer-Netzwerk umfassen.

Gemäß einer Ausführungsform ist der Authentifizierungsserver ein Domänen-Kontroller

Dadurch wird erreicht, dass eine zentrale Nutzerverwaltung für komplexe Kommunikationssysteme, Computer-Betriebssysteme und/oder Computer-Netzwerke möglich wird.

Der Domänen-Kontroller kann einen Server zur zentralen Authentifizierung und Autorisierung von Computern und Nutzern in einem Computer-Netzwerk umfassen.

Gemäß einer Ausführungsform ist das Kommunikationssystem ein Kommunikationsnetzwerk oder ein Betriebssystem.

Dadurch wird erreicht, dass das Verfahren zum Gewähren eines Nutzerzugriffs auch auf Kommunikationsnetzwerke oder Betriebssysteme anwendbar wird.

Ein Kommunikationsnetzwerk kann beispielsweise durch eine Mehrzahl von Computern in Form eines Local Area Network (LAN) oder des Internet gebildet sein. Ferner kann das Kommunikationsnetzwerk mittels eines Ethernet, eines Wireless Local Area Network (WLAN) oder eines HiperLAN realisiert werden. Ein Betriebssystem kann beispielsweise zur Ressourcenverwaltung und/oder Programmverwaltung auf einem Computer zum Einsatz kommen.

Gemäß einer Ausführungsform ist der Identifizierungsserver ein eID-Server.

Dadurch wird erreicht, dass eine bestehende Infrastruktur zur elektronischen Authentifizierung von Identifikationsdokumenten zum Einsatz kommen kann.

Der eID-Server kann beispielsweise gemäß der Richtlinie BSI TR-03130 Version 1.6 aufgebaut sein und mit dem Identifikationsdokument und dem Authentifizierungsserver wechselwirken.

Gemäß einem weiteren Aspekt betrifft die Erfindung einen Authentifizierungsserver zum Gewähren eines Nutzerzugriffs auf ein Kommunikationssystem unter Verwendung eines elektronisch auslesbaren Identifikationsdokumentes des gemäß dem unabhängigen Anspruch 7.

Durch den Authentifizierungsserver können die vorgenannten Verfahren zum Gewähren eines Nutzerzugriffs auf ein Kommunikationssystem durchgeführt werden. Das Aussenden der Authentifizierungsanfrage kann, gemäß einer Ausführungsform, zu einem Identifizierungsserver erfolgen. Das Empfangen der elektronischen Identifikation über das Kommunikationsnetzwerk kann, gemäß einer Ausführungsform, von dem Identifizierungsserver erfolgen.

Die Kommunikationsschnittstelle kann beispielsweise durch eine Computer-Netzwerk-Schnittstelle gebildet sein.

Der Speicher kann beispielsweise durch eine Datenbank realisiert werden.

Der Prozessor kann beispielsweise ausgebildet sein, ein Computerprogramm zum Vergleichen der empfangenen elektronischen Identifikation mit der vorgespeicherten elektronischen Identifikation auszuführen.

Gemäß einer Ausführungsform ist die Kommunikationsschnittstelle ausgebildet, eine elektronische Identifikation des Identifikationsdokumentes zu empfangen, und ist der Speicher ausgebildet, die empfangene elektronische Identifikation zu speichern, um die vorgespeicherte elektronische Identifikation zu erhalten.

Dadurch wird erreicht, dass eine vorgespeicherte elektronische Identifikation im Authentifizierungsserver vorliegt und mit einer übertragenen elektronischen Identifikation des Identifikationsdokumentes verglichen werden kann.

Gemäß einer Ausführungsform ist die Kommunikationsschnittstelle ausgebildet, einen öffentlichen kryptographischen Schlüssel des Authentifizierungsservers an das Identifikationsdokument auszusenden, und, ansprechend hierauf, eine elektronische Identifikation des Identifikationsdokumentes zu empfangen.

Dadurch wird erreicht, dass im Identifikationsdokument eine eindeutige und dem Authentifizierungsserver zugeordnete elektronische Identifikation erzeugt werden kann. Die elektronische Identifikation kann vom Authentifizierungsserver gespeichert und/oder mit einer bereits vorgespeicherten elektronischen Identifikation verglichen werden.

Gemäß einer Ausführungsform ist der Prozessor ausgebildet, den Nutzerzugriff bei Übereinstimmung der empfangenen elektronischen Identifikation und der vorgespeicherten elektronischen Identifikation zu gewähren.

Dadurch wird erreicht, dass der Nutzerzugriff nur dann gewährt wird, wenn die elektronische Identifikation des Nutzers bereits im Authentifizierungsserver vorbekannt ist.

Die Übereinstimmung zwischen der empfangenen elektronischen Identifikation und der vorgespeicherten elektronischen Identifikation kann beispielsweise dann gegeben sein, wenn die empfangene elektronische Identifikation und die vorgespeicherte elektronische Identifikation identisch sind.

Gemäß einer Ausführungsform ist der Authentifizierungsserver ein Domänen-Kontroller eines Kommunikationssystems, wobei das Kommunikationssystem ein Kommunikationsnetzwerk oder ein Betriebssystem ist.

Dadurch wird erreicht, dass eine zentrale Nutzerverwaltung für komplexe Kommunikationssysteme, komplexe Kommunikationsnetzwerke und/oder komplexe Betriebssysteme möglich wird. Zudem wird dadurch erreicht, dass das Verfahren zum Gewähren eines Nutzerzugriffs auch auf Kommunikationsnetzwerke oder Betriebssysteme anwendbar wird.

Der Domänen-Kontroller kann einen Server zur zentralen Authentifizierung und Autorisierung von Computern und Nutzern in einem Computer-Netzwerk umfassen.

Das Kommunikationsnetzwerk kann beispielsweise durch eine Mehrzahl von Computern in Form eines Local Area Network (LAN) oder des Internet gebildet sein.

Das Betriebssystem kann beispielsweise zur Ressourcenverwaltung und/oder Programmverwaltung auf einem Computer zum Einsatz kommen.

Weitere Merkmale des Authentifizierungsservers ergeben sich unmittelbar aus der Funktionalität der vorgenannten Verfahren zur Gewährung eines Nutzerzugriffs auf das Kommunikationssystem.

Gemäß einem weiteren Aspekt betrifft die Erfindung ein Computerprogramm mit einem Programmcode zum Ausführen des Verfahrens, wenn der Programmcode auf einem Computer ausgeführt wird.

Dadurch wird erreicht, dass die vorgenannten Verfahren auf einem Computer automatisiert und wiederholbar ausgeführt werden können.

Das Computerprogramm kann beispielsweise auf einem Prozessor ausgeführt werden.

Der Programmcode kann beispielsweise in maschinenlesbarer Form vorliegen.

Die Erfindung kann in Software und/oder in Hardware realisiert werden.

Weitere Ausführungsbeispiele werden Bezug nehmend auf die beiliegenden Zeichnungen näher erläutert. Es zeigen:
- Fig. 1: eine schematische Darstellung eines Kommunikationsszenarios zum Gewähren eines Nutzerzugriffs auf ein Kommunikationssystem unter Verwendung eines elektronisch auslesbaren Identifikationsdokumentes des Nutzers gemäß einer Ausführungsform;
- Fig. 2: eine schematische Darstellung einer Anmeldemaske zur Erzeugung einer Zugriffsanfrage eines Nutzers für einen Zugriff auf ein Kommunikationssystem gemäß einer Ausführungsform;
- Fig. 3: eine schematische Darstellung einer Anmeldemaske zur Erzeugung einer Zugriffsanfrage eines Nutzers für einen Zugriff auf ein Kommunikationssystem gemäß einer Ausführungsform;
- Fig. 4: ein Ablaufdiagramm eines Verfahrens zum Gewähren eines Nutzerzugriffs auf ein Kommunikationssystem unter Verwendung eines elektronisch auslesbaren Identifikationsdokumentes des Nutzers gemäß einer Ausführungsform;
- Fig. 5: eine schematische Darstellung eines Authentifizierungsservers gemäß einer Ausführungsform;
- Fig. 6: ein Ablaufdiagramm eines Anmeldevorgangs eines Nutzers an einem Kommunikationssystem gemäß einer Ausführungsform;
- Fig. 7: ein Diagramm eines Verfahrens zum Gewähren eines Nutzerzugriffs auf ein Kommunikationssystem unter Verwendung eines elektronisch auslesbaren Identifikationsdokumentes des Nutzers gemäß einer Ausführungsform; und
- Fig. 8: ein Diagramm eines Verfahrens zum Gewähren eines Nutzerzugriffs auf ein Kommunikationssystem unter Verwendung eines elektronisch auslesbaren Identifikationsdokumentes des Nutzers gemäß einer Ausführungsform.

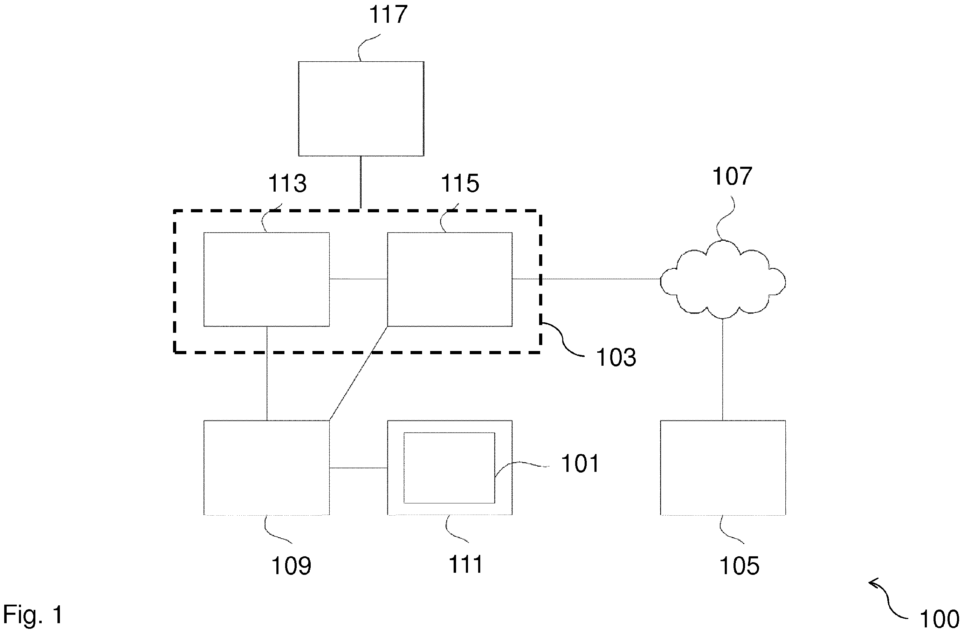

Fig. 1 zeigt eine schematische Darstellung eines Kommunikationsszenarios 100 zum Gewähren eines Nutzerzugriffs auf ein Kommunikationssystem 117 unter Verwendung eines elektronisch auslesbaren Identifikationsdokumentes 101 des Nutzers gemäß einer Ausführungsform. Das Kommunikationsszenario 100 umfasst ein Identifikationsdokument 101, einen Authentifizierungsserver 103, einen Identifizierungsserver 105, ein Kommunikationsnetzwerk 107, einen Computer 109, einen kontaktlosen Kartenleser 111, eine Authentifizierungsentität 113, eine Konnektorentität 115 sowie ein Kommunikationssystem 117.

Das Identifikationsdokument 101 ist beispielsweise kontaktlos auslesbar und kann beispielsweise ein neuer Personalausweis bzw. nPA sein.

Der Authentifizierungsserver 103 umfasst optional eine Authentifizierungsentität 113 sowie eine Konnektorentität 115. Die Authentifizierungsentität 113 ist für eine Nutzerverwaltung des Kommunikationssystems 117 beispielsweise mittels einer Datenbank mit hinterlegten Datensätzen für die Nutzer ausgelegt. Die Konnektorentität 115 ist für eine Erweiterung der Funktionalität der Authentifizierungsentität 113 vorgesehen und ermöglicht eine Verbindung zwischen der Authentifizierungsentität 113 und dem Identifizierungsserver 105.

Der Identifizierungsserver 105 ist für eine Verifikation des Identifikationsdokumentes 101 vorgesehen und kann hierfür eine elektronische Identifikation aus dem Identifikationsdokument 101 auslesen, die anschließend an den Authentifizierungsserver 103 übermittelt wird. Der Identifizierungsserver 105 kann beispielsweise ein eID-Server sein.

Das Kommunikationsnetzwerk 107 dient dem Austausch von Befehlen sowie der elektronischen Identifikation zwischen dem Identifikationsdokument 101, dem Authentifizierungsserver 103 und dem Identifizierungsserver 105 und kann beispielsweise durch eine lokale Netzwerkverbindung in Form eines Local Area Network (LAN) oder des Internet realisiert sein. Das Kommunikationsnetzwerk 107 ist hierfür an die Konnektorentität 115 sowie an den Identifizierungsserver 105 angeschlossen. Gemäß einer Ausführungsform kann das Kommunikationsnetzwerk 107 ebenfalls an den Computer 109, den kontaktlosen Kartenleser 111 und/oder das Identifikationsdokument 101 angeschlossen sein.

Der Computer 109 ist für die Erzeugung einer Zugriffanfrage auf das Kommunikationsnetzwerk vorgesehen und kann hierbei über Nutzerschnittstellen, wie beispielsweise eine Tastatur, eine Computermaus und/oder einen Bildschirm verfügen. Auf dem Computer 109 kann zudem ein Betriebssystem ausgeführt werden, auf welches, gemäß einer Ausführungsform, ein Zugriff gewährt werden soll. Auf dem Computer kann ferner, gemäß einer Ausführungsform, ein Computerprogramm ausgeführt werden, welches die Kommunikation mit dem Identifikationsdokument 101, dem Authentifizierungsserver 103 sowie dem Identifizierungsserver 105 steuert und koordiniert. Das Computerprogramm kann, gemäß einer Ausführungsform, ein eID-Client sein. Der Computer 109 kann, gemäß einer Ausführungsform, ein Personal Computer (PC) und/oder ein Terminal bzw. ein Client-Terminal sein.

Der kontaktlose Kartenleser 111 ist für die kontaktlose Kommunikation mit dem Identifikationsdokument 101 vorgesehen und ist in diesem Ausführungsbeispiel an den Computer 109 angeschlossen. Mittels des kontaktlosen Kartenlesers 111 kann die elektronisch auslesbare Identifikation aus dem Identifikationsdokument 101 ausgelesen werden. Die Kommunikation zwischen dem kontaktlosen Kartenleser 111 und dem Identifikationsdokument 101 kann beispielsweise über einen elektronisch auslesbaren Schaltkreis im Identifikationsdokument 101, beispielsweise einen RFID-Chip, und einem zugehörigen elektronischen Schaltkreis im kontaktlosen Kartenleser 111 durchgeführt werden.
Gemäß einer Ausführungsform ist der Kartenleser oder Leser nur dann kontaktlos, wenn als Identifikationsdokument 101 ein nPA oder ein vergleichbares Dokument, wie beispielsweise ein elektronischer Aufenthaltstitel, verwendet wird. Andere Identifikationsdokumente 101 bzw. Dokumente können, gemäß einer Ausführungsform, dasselbe Protokoll unterstützen aber eine kontaktbehaftete Schnittstelle aufweisen.

Das Kommunikationssystem 117 ist mit dem Authentifizierungsserver 103 verbunden, welcher den Nutzerzugriff auf das Kommunikationssystem 117 gewährt oder verwehrt. Das Kommunikationssystem 117 kann beispielsweise durch ein Computer-Netzwerk oder einen Server gebildet sein. Gemäß einer Ausführungsform ist das Kommunikationssystem 117 ein Computer-Betriebssystem, das auf einem Computer, beispielsweise dem Computer 109, ausgeführt wird.

Gemäß einer Ausführungsform bildet oder umfasst der Computer 109 ein Kommunikationssystem, beispielsweise ein Betriebssystem, auf das der Nutzer zugreifen kann. In diesem Fall ist das Kommunikationssystem 117 optional oder kein Element des Kommunikationsszenarios 100.

Die Gewährung eines Nutzerzugriffs auf das Kommunikationssystem 117 kann, gemäß einer Ausführungsform, folgendermaßen durchgeführt werden:
Der Nutzer erzeugt mittels des Computers 109 eine Zugriffsanfrage auf das Kommunikationssystem 117 und legt das Identifikationsdokument 101 auf den kontaktlosen Kartenleser 111 auf. Der Computer 109 überträgt daraufhin die Zugriffsanfrage auf das Kommunikationssystem 117 zu dem Authentifizierungsserver 103, wobei der Authentifizierungsserver 103 die Authentifizierungsentität 113 sowie die Konnektorentität 115 umfasst. Gemäß einer Ausführungsform kann die Übertragung der Zugriffsanfrage von dem Computer 109 zu dem Authentifizierungsserver 103 mittels eines Kommunikationsnetzwerkes, beispielsweise dem Kommunikationsnetzwerk 107, erfolgen.

Die Konnektorentität 115 erzeugt daraufhin eine Authentifizierungsanfrage und überträgt die Authentifizierungsanfrage über das Kommunikationsnetzwerk 107 an den Identifizierungsserver 105. Der Identifizierungsserver 105 baut daraufhin eine Verbindung zum Identifikationsdokument 101 auf und liest eine elektronische Identifikation aus dem Identifikationsdokument 101 aus. Die Verbindung zwischen dem Identifizierungsserver 105 und dem Identifikationsdokument 101 kann beispielsweise über das Kommunikationsnetzwerk 107, den Authentifizierungsserver 103, den Computer 109 sowie den kontaktlosen Kartenleser 111 erfolgen.

Gemäß einer Ausführungsform wird die Authentisierungsanfrage von der Konnektorentität 115 an den Computer 109 bzw. PC geschickt und von diesem an den Identifizierungsserver 105 bzw. eID-Server weitergeleitet. Die Antwort des Identifizierungsservers 105 bzw. eID-Servers wird vom eID-Client empfangen oder von einer weiteren bzw. anderen Software auf dem Computer 109 bzw. PC an diesen weitergegeben. Danach kann der eID-Client die erhaltenen Informationen nutzen, um eine Verbindung zum Identifizierungsserver 105 bzw. eID-Server aufzubauen. Von diesem kann er dann Befehle erhalten, die er ausführen kann, beispielsweise zur Kommunikation mit dem Identifikationsdokument 101 bzw. eID-Dokument. Anschließend kann der Identifizierungsserver 105 bzw. eID-Server das Ergebnis an den eID-Client oder ein weiteres bzw. anderes Programm auf dem Computer 109 bzw. PC übermitteln, das die Daten an die Konnektorentität 115 übergeben kann.

Gemäß einer Ausführungsform kann der Computer 109 auch direkt mit dem Kommunikationsnetzwerk 107 verbunden sein. Die Verbindung zwischen dem Identifizierungsserver 105 und dem Identifikationsdokument 101 kann in diesem Fall beispielsweise auch über das Kommunikationsnetzwerk 107, den Computer 109 sowie den kontaktlosen Kartenleser 111 erfolgen. Die elektronische Identifikation des Identifikationsdokumentes 101 kann, gemäß einer Ausführungsform, durch das Identifikationsdokument 101 unter Verwendung eines öffentlichen kryptographischen Schlüssels des Authentifizierungsservers 103 erzeugt werden.

Der öffentliche kryptographische Schlüssel des Authentifizierungsservers 103 kann im Computer 109, dem kontaktlosen Kartenleser 111, dem Authentifizierungsserver 103 und/oder dem Identifizierungsserver 105 gespeichert sein und über ein Kommunikationsnetzwerk, beispielsweise das Kommunikationsnetzwerk 107, zu dem Identifikationsdokument 101 übertragen werden. Der Identifizierungsserver 105 überträgt daraufhin die elektronische Identifikation des Identifikationsdokumentes 101 über das Kommunikationsnetzwerk 107 zu dem Authentifizierungsserver 103. Der Authentifizierungsserver 103 vergleicht die übertragene elektronische Identifikation des Identifikationsdokumentes 101 mit vorgespeicherten elektronischen Identifikationen, die beispielsweise in Form hinterlegter Datensätze in einer Datenbank der Authentifizierungsentität 113 abgelegt sein können.

Gemäß einer Ausführungsform wird bei Übereinstimmung der übertragenen elektronischen Identifikation des Identifikationsdokumentes 101 mit einer vorgespeicherten elektronischen Identifikation des Nutzers im Authentifizierungsserver 103 der Nutzerzugriff auf das Kommunikationssystem 117 gewährt.

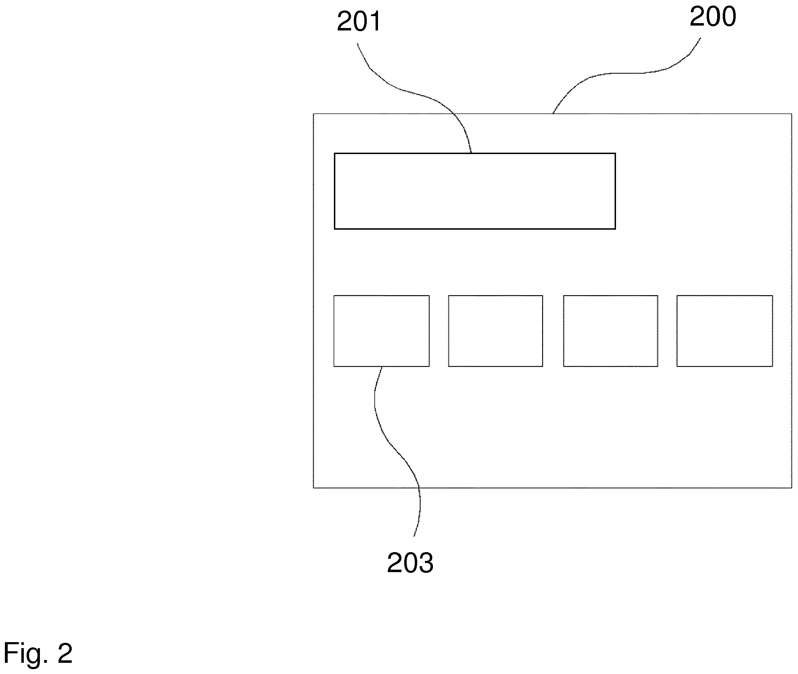

Fig. 2 zeigt eine schematische Darstellung einer Anmeldemaske 200 zur Erzeugung einer Zugriffsanfrage eines Nutzers für einen Zugriff auf ein Kommunikationssystem 117 gemäß einer Ausführungsform. Die Anmeldemaske 200 kann ein Textfeld 201 sowie ein Auswahlfeld 203 umfassen.

Die Anmeldemaske 200 kann beispielsweise durch ein Computer-Betriebssystem auf einem Bildschirm angezeigt werden.

Das Textfeld 201 kann beispielsweise einen Hinweistext für die verschiedenen Anmeldevarianten bzw. Authentifizierungsvarianten umfassen.

Das Auswahlfeld 203 kann beispielsweise eine Mehrzahl von Anmeldevarianten bzw. Authentifizierungsvarianten zur Auswahl stellen. Die Auswahl kann beispielsweise die Nutzung von Benutzername mit Passwort, die Nutzung einer Login-Karte bzw. SmartCard und/oder die Nutzung eines Identifikationsdokumentes 101, beispielsweise eines neuen Personalausweises, umfassen.

Die Anmeldemaske 200 kann beispielsweise einem Nutzer des Computers 109 angezeigt werden. Der Nutzer kann beispielsweise durch die Auswahl einer Anmeldevariante bzw. Authentifizierungsvariante die Erzeugung der Zugriffsanfrage auf das Kommunikationssystem 117 einleiten.

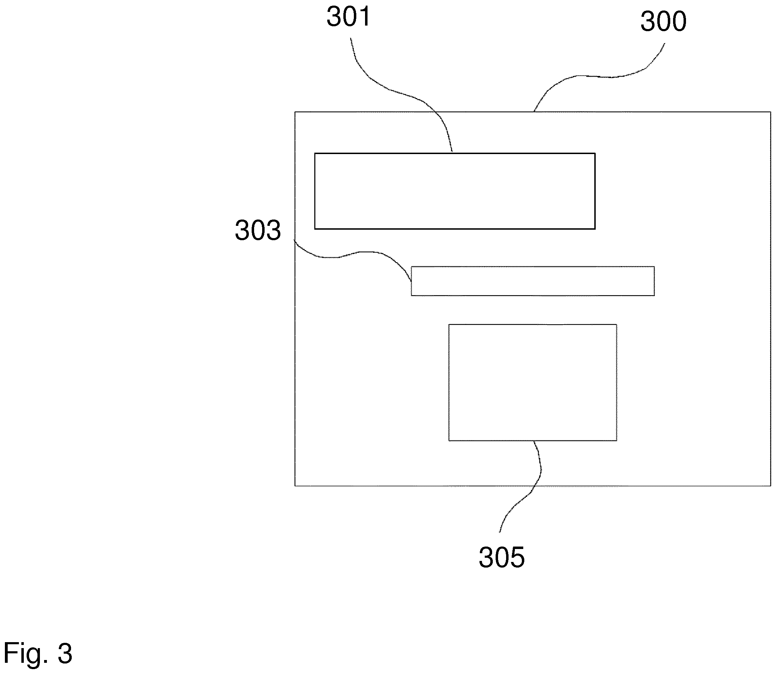

Fig. 3 zeigt eine schematische Darstellung einer Anmeldemaske 300 zur Erzeugung einer Zugriffsanfrage eines Nutzers für einen Zugriff auf ein Kommunikationssystem 117 gemäß einer Ausführungsform. Die Anmeldemaske 300 kann ein Textfeld 301, ein Eingabefeld 303 und eine Bildschirmtastatur 305 umfassen.

Die Anmeldemaske 300 kann beispielsweise durch ein Computer-Betriebssystem auf einem Bildschirm angezeigt werden.

Das Textfeld 301 kann beispielsweise einen Hinweistext für die weiteren Schritte des Nutzers, beispielsweise Hinweise zur Eingabe einer persönlichen Identifikationsnummer bzw. PIN, umfassen.

Das Eingabefeld 303 kann beispielsweise für die Eingabe einer persönlichen Identifikationsnummer bzw. einer eID-PIN des neuen Personalausweises vorgesehen sein. Das Eingabefeld 303 kann optional sein und beispielsweise entfallen, wenn die persönliche Identifikationsnummer am kontaktlosen Kartenleser 111 eingegeben werden kann.

Die Bildschirmtastatur 305 kann für die Eingabe der persönlichen Identifikationsnummer bzw. der eID-PIN des neuen Personalausweises vorgesehen sein. Die Bildschirmtastatur 305 kann für die Eingabe mittels einer Computermaus und/oder eines berührungsempfindlichen Bildschirms vorgesehen sein. Die Bildschirmschirmtastatur 305 ist optional und kann insbesondere dann vorteilhaft sein, wenn die persönliche Identifikationsnummer nicht am kontaktlosen Kartenleser 111 eingegeben werden kann.

Die Anmeldemaske 300 kann beispielsweise einem Nutzer des Computers 109 angezeigt werden. Der Nutzer kann beispielsweise durch die Eingabe der persönlichen Identifikationsnummer bzw. der eID-PIN des neuen Personalausweises die Erzeugung der Zugriffsanfrage auf das Kommunikationssystem 117 einleiten. Gemäß einer Ausführungsform wird die PIN erst eingegeben, nachdem die Authentisierungsanfrage erzeugt und vom Identifizierungsserver 105 bzw. eID-Server verarbeitet wurde und eine Verbindung zwischen dem Identifizierungsserver 105 bzw. eID-Server und eID-Client besteht.

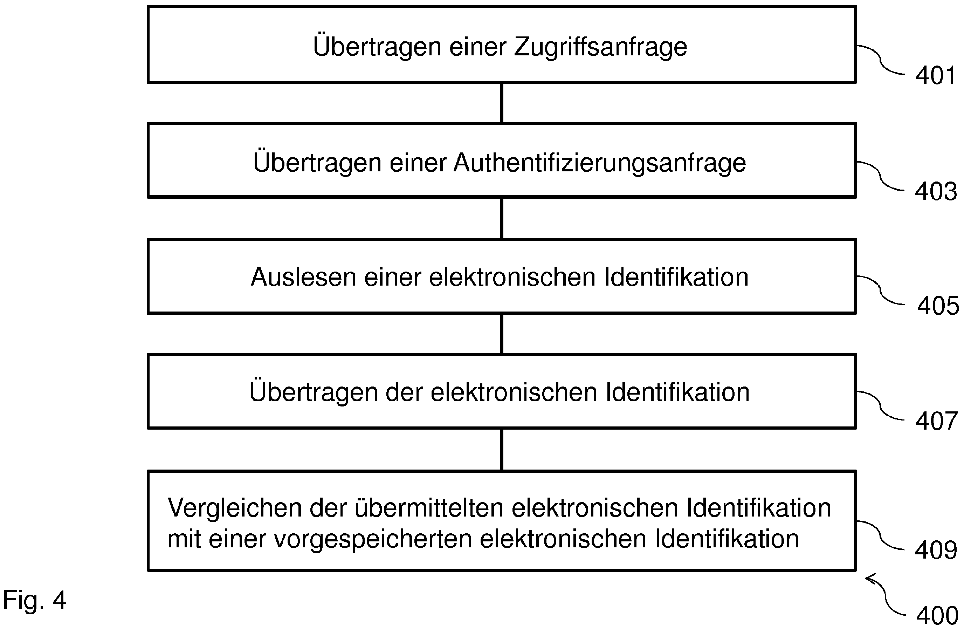

Fig. 4 zeigt ein Ablaufdiagramm eines Verfahrens 400 zum Gewähren eines Nutzerzugriffs auf ein Kommunikationssystem 117 unter Verwendung eines elektronisch auslesbaren Identifikationsdokumentes des Nutzers gemäß einer Ausführungsform. Das Verfahren 400 umfasst einen Schritt eines Übertragens 401 einer Zugriffsanfrage des Nutzers für einen Zugriff auf das Kommunikationssystem 117 zu einem Authentifizierungsserver 103 des Kommunikationssystems 117. Zudem umfasst das Verfahren 400 einen Schritt eines Übertragens 403 einer Authentifizierungsanfrage von dem Authentifizierungsserver 103 zu einem Identifizierungsserver 105 ansprechend auf den Empfang der Zugriffsanfrage. Zudem umfasst das Verfahren 400 einen Schritt eines Auslesens 405 einer elektronischen Identifikation aus dem Identifikationsdokument 101 durch den Identifizierungsserver 105 ansprechend auf den Empfang der Authentifizierungsanfrage. Zudem umfasst das Verfahren 400 einen Schritt eines Übertragens 407 der elektronischen Identifikation von dem Identifizierungsserver 105 zu dem Authentifizierungsserver 103. Zudem umfasst das Verfahren 400 einen Schritt eines Vergleichens 409 der übermittelten elektronischen Identifikation mit einer vorgespeicherten elektronischen Identifikation durch den Authentifizierungsserver 103, um den Nutzerzugriff zu gewähren.

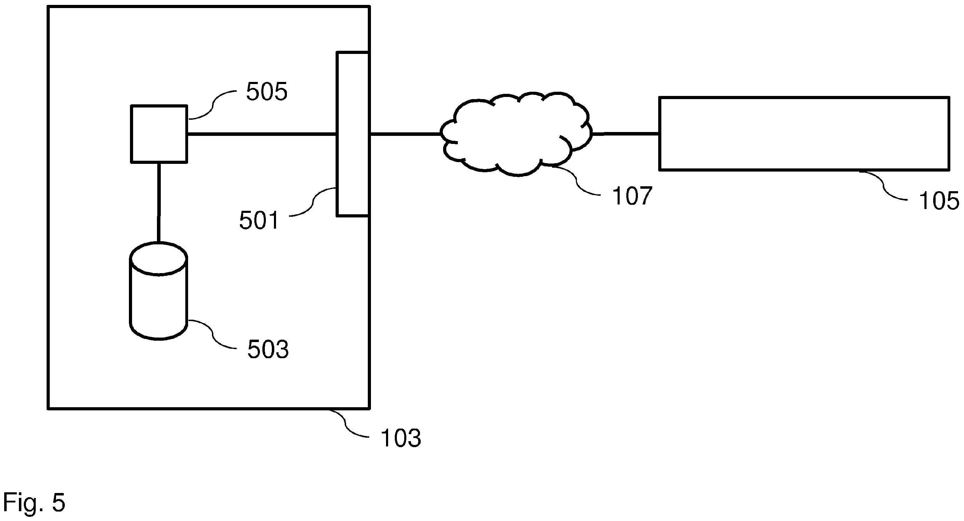

Fig. 5 zeigt eine schematische Darstellung eines Authentifizierungsservers 103 gemäß einer Ausführungsform. Der Authentifizierungsserver 103 umfasst eine Kommunikationsschnittstelle 501, einen Speicher 503 und einen Prozessor 505. Der Authentifizierungsserver 103 ist über ein Kommunikationsnetzwerk 107 mit einem Identifizierungsserver 105 verbunden.

Der Authentifizierungsserver 103 dient dem Gewähren bzw. dem Verweigern eines Nutzerzugriffs auf das Kommunikationssystem 117.

Der Identifizierungsserver 105 ist für eine Verifikation eines Identifikationsdokumentes 101 vorgesehen und kann hierfür eine elektronische Identifikation aus dem Identifikationsdokument 101 auslesen, die anschließend an den Authentifizierungsserver 103 übermittelt wird. Der Identifizierungsserver 105 kann beispielsweise ein eID-Server sein. Der Identifizierungsserver 105 ist hierbei nicht Merkmal des Authentifizierungsservers 103.

Das Kommunikationsnetzwerk 107 dient dem Austausch von Befehlen sowie der elektronischen Identifikation zwischen dem Identifikationsdokument 101, dem Authentifizierungsserver 103 und dem Identifizierungsserver 105 und kann beispielsweise durch eine lokale Netzwerkverbindung in Form eines Local Area Network (LAN) oder des Internet realisiert sein.

Die Kommunikationsschnittstelle 501 ist zum Empfangen einer Zugriffsanfrage des Nutzers für einen Zugriff auf das Kommunikationssystem 117 vorgesehen, wobei die Kommunikationsschnittstelle 501 ausgebildet ist, ansprechend auf den Empfang der Zugriffsanfrage, eine Authentifizierungsanfrage über ein Kommunikationsnetzwerk, beispielsweise dem Kommunikationsnetzwerk 107, zu dem Identifizierungsserver 105 auszusenden, und wobei die Kommunikationsschnittstelle 501 ausgebildet ist, ansprechend auf das Aussenden der Authentifizierungsanfrage eine elektronische Identifikation über das Kommunikationsnetzwerk von dem Identifizierungsserver 105 zu empfangen.

Der Speicher 503 ist zum Bereitstellen einer vorgespeicherten elektronischen Identifikation vorgesehen und kann beispielsweise in Form einer Datenbank ausgebildet sein.

Der Prozessor 505 ist ausgebildet, die empfangene elektronische Identifikation mit der vorgespeicherten elektronischen Identifikation zu vergleichen, um den Nutzerzugriff zu gewähren. Gemäß einer Ausführungsform ist der Prozessor 505 ferner ausgebildet, ein Computerprogramm zum Vergleich der empfangenen elektronischen Identifikation mit der vorgespeicherten elektronischen Identifikation auszuführen.

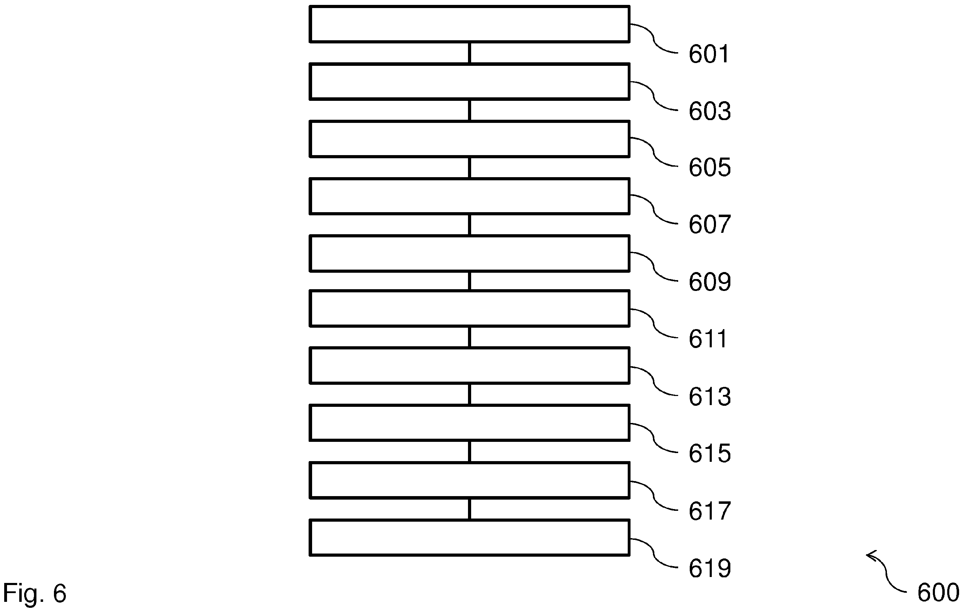

Fig. 6 zeigt ein Ablaufdiagramm eines Anmeldevorgangs 600 eines Nutzers an einem Kommunikationssystem 117 gemäß einer Ausführungsform. Der Anmeldevorgang 600 kann beispielsweise für den Zugriff auf ein Betriebssystem und/oder ein Computer-Netzwerk mittels des Identifikationsdokumentes 101, beispielsweise des neuen Personalausweises, eingesetzt werden. Der Anmeldevorgang 600 kann ferner eine Login-Anfrage für das Betriebssystem und/oder das Computer-Netzwerk umfassen.

In einem Betriebssystem und/oder einem Computer-Netzwerk, welche Authentisierungsvorgänge mit einem Identifikationsdokument, beispielsweise dem neuen Personalausweis, unterstützen sollen, kann die Nutzung folgender Komponenten vorteilhaft sein: 1. Ein Active Directory (AD) Server zum Verwalten von Nutzer-Informationen, beispielsweise einer Mehrzahl von elektronischen Identifikationen der Nutzer, zur Durchführung von Anmeldevorgängen, beispielsweise von Login-Vorgängen, bzw. zur Prüfung von Zugangsdaten, beispielsweise einem Vergleich der übermittelten elektronischen Identifikation des Nutzers mit vorgespeicherten elektronischen Identifikationen; 2. Ein eID-Connector als Bindeglied zwischen dem Active Directory (AD) Server und dem Identifizierungsserver bzw. eID-Server; 3. Ein Personal Computer (PC) als Computer, an dem sich ein Nutzer anmelden möchte; 4. Ein Identifizierungsserver bzw. eID-Server zur Kommunikation mit dem Identifikationsdokument, beispielsweise dem neuen Personalausweis des Nutzers.

Gemäß einer Ausführungsform werden der Active Directory (AD) Server und der elD-Connector durch den Authentifizierungsserver 103 implementiert. Der Active Directory (AD) Server kann hierbei durch die Authentifizierungsentität 113 bereitgestellt bzw. implementiert werden. Der eID-Connector kann durch die Konnektorentität 115 bereitgestellt bzw. implementiert werden. Der eID-Server kann durch den Identifizierungsserver 105 bereitgestellt bzw. implementiert werden. Der Personal Computer (PC) kann beispielsweise durch den Computer 109 bereitgestellt bzw. implementiert werden. Das genannte Identifikationsdokument kann beispielsweise durch das Identifikationsdokument 101 realisiert sein. Das Betriebssystem kann beispielsweise auf dem Computer 109 ausgeführt werden. Das Computer-Netzwerk kann beispielsweise durch das Kommunikationssystem 117 gebildet sein.

Die Anmeldeinfrastruktur des Betriebssystems kann derart erweitert werden, dass eine Verbindung bzw. Kommunikation zwischen dem Identifikationsdokument 101, beispielsweise dem neuen Personalausweis, und dem Identifizierungsserver 105 bzw. eID-Server ermöglicht wird.

Ein Anmeldevorgang 600 kann beispielsweise mehrere Schritte umfassen. In einem Schritt 601 bietet der Betriebssystem-Anmeldebildschirm verschiedene Anmeldeoptionen an, beispielsweise eine Anmeldung mittels Benutzername mit Passwort, eine Anmeldung mittels Login-Karte bzw. Smartcard und/oder eine Anmeldung mittels Identifikationsdokument 101, beispielsweise dem neuen Personalausweis. In einem Schritt 603 kann der Nutzer beispielsweise die Option einer Anmeldung mittels Identifikationsdokument 101, beispielsweise dem neuen Personalausweis, wählen. In einem Schritt 605 kann die angepasste Betriebssystem-Login-Infrastruktur den Active Directory (AD) Server über die Auswahl informieren. Der Active Directory (AD) Server kann den Anmeldevorgang an den eID-Connector delegieren. In einem Schritt 607 kann der eID-Connector einen Security Assertion Markup Language (SAML) Request erzeugen und diesen an die erweiterte Betriebssystem-Anmeldeinfrastruktur des PCs des Nutzers weiterleiten. In einem Schritt 609 kann die Betriebssystem-Anmeldeinfrastruktur des PCs den Security Assertion Markup Language (SAML) Request an den Identifizierungsserver bzw. eID-Server weiterleiten. In einem Schritt 611 kann der Identifizierungsserver bzw. eID-Server eine Hypertext Markup Language (HTML) Seite ausliefern, die die erweiterte Betriebssystem-Anmeldeinfrastruktur interpretieren kann und Informationen bzw. Daten extrahieren kann. Die extrahierten Informationen bzw. Daten können an den eID-Client weitergegeben werden. In einem Schritt 613 kann der eID-Client Verbindung zum Identifizierungsserver bzw. eID-Server aufnehmen. Der Identifizierungsserver bzw. elD-Server kann die angeforderten Informationen bzw. Daten, insbesondere die Restricted Identification, auslesen. Zuvor kann der Nutzer aufgefordert werden, seine persönliche Identifikationsnummer bzw. eID-PIN am Kartenleser, an der Bildschirmtastatur oder an dem Eingabefeld einzugeben. In einem Schritt 615 kann der Identifizierungsserver bzw. eID-Server eine Security Assertion Markup Language (SAML) Response an die erweiterte Betriebssystem-Anmeldeinfrastruktur zurückliefern. In einem weiteren Schritt 617 kann die erweiterte Betriebssystem-Anmeldeinfrastruktur die Security Assertion Markup Language (SAML) Response an den eID-Connector weitergeben, der die Informationen bzw. Daten interpretieren kann. In einem Schritt 619 kann der eID-Connector prüfen, ob unter der erhaltenen Restricted Identification ein Benutzerkonto geführt wird und im Erfolgsfall Informationen über das Benutzerkonto an den Active Directory (AD) Server weitergeben.

Die Schritte 607, 609, 611, 613, 615 und 617 können hierbei, gemäß einer Ausführungsform, einer eID-Authentisierung gemäß den Richtlinien BSI TR-03110, BSI TR-03130 und/oder BSI TR-03127 entsprechen. Hierbei korrespondieren der Service Provider mit dem AD/eID-Konnektor, der Browser mit der erweiterten Betriebssystem-Anmeldeinfrastruktur und der eID-Client bzw. die AusweisApp mit dem eID-Client.

Gemäß einer Ausführungsform können der Service Provider bzw. AD/eID-Konnektor durch den Authentifizierungsserver 103 bereitgestellt bzw. implementiert sein. Ferner können der Browser bzw. die erweiterte Betriebssystem-Anmeldeinfrastruktur auf dem Computer 109 ausgeführt werden. Ferner können der eID-Client bzw. die AusweisApp auf dem Computer 109 ausgeführt werden.

Gemäß einer Ausführungsform kann ein Security Assertion Markup Language (SAML) Request beispielsweise folgendermaßen gebildet sein:

```
 <?xml version="1.0" encoding="UTF-8"?>
 <saml2p:AuthnRequest xmlns:saml2p="urn:oasis:names:tc:SAML:2.0:protocol"
 AssertionConsumerServiceURL="https://localhost:1443/bdr-demo-sp-0.0.5-
 SNAPSHOT/saml/Response"
 Destination="https://vtddeidfrontend.issh.de/epa"
 ForceAuthn="true"
 ID="-2caa671b2714f652ae758c4ac3cc99e5"
 IsPassive="false"
 Issuelnstant="2013-02-12T13:01 :40.355Z"
 ProtocolBinding="urn:oasis:names:tc:SAML:2.0:bindings:HTTP-POST"
 Version="2.0">
 <saml2:Issuer
 xmlns:saml2="urn:oasis:names:tc:SAML:2.0:assertion">https://localhost:1443/Example-
 ServiceProvider</saml2:Issuer>
 <ds:Signature xmlns:ds="http://www.w3.org/2000/09/xmldsig#">
 <ds:SignedInfo>
 <ds:CanonicalizationMethod Algorithm="http://www.w3.org/2001/10/xml-exc-c14n#"/>
 <ds:SignatureMethod Algorithm="http://www.w3.org/2000/09/xmldsig#rsa-sha1"/>
 <ds:Reference URI="#_2caa671b2714f652ae758c4ac3cc99e5">
 <ds:Transforms>
 <ds:Transform Algorithm="http://www.w3.org/2000/09/xmldsig#enveloped-signature"/>
 <ds:Transform Algorithm="http://www.w3.org/2001/10/xml-exc-c14n#"/>
 </ds:Transforms>
 <ds:DigestMethod Algorithm="http://www.w3.org/2000/09/xmldsig#sha1"/>
 <ds:DigestValue/>
 </ds:Reference>
 </ds:SignedInfo>
 <ds:SignatureValue/>
 </ds:Signature>
 <saml2p:Extensions>
 <eid:RequestAttributes xmlns:eid="http://www.eid-service.de/eid/idcard/1.0"
 PreSharedKey="1b20ba000f9def917a39082642fe337e705950bc7566d81d958b810db46b
 4b16"
 RequestAllDefaults="false"
 Version="1">
 <eid:Attribute Name="Restrictedld" Required="true"/>
 </eid:RequestAttributes>
 </saml2p:Extensions>
 </saml2p:AuthnRequest>
```

Gemäß einer Ausführungsform kann eine Security Assertion Markup Language (SAML) Response beispielsweise folgendermaßen gebildet sein:

```
 <?xml version="1.0" encoding="UTF-8"?>
 <saml:Assertion xmlns:saml="urn:oasis:names:tc:SAML:2.0:assertion"
 ID=" 5f8f92c237547fda4cc99728b881c133" Issuelnstant="2013-02-12T13:01:40.555Z"
 Version="2.0">
 <saml:Issuer Format="urn:oasis:names:tc:SAML:2.0:nameid-
 format:entity">https://vTDDeIDFrontend.issh.de:443/</saml:Issuer>
 <saml:Subject>
 <saml:NameID Format="urn:oasis:names:tc:SAML:2.0:nameid-
 format:transient">_298b56e086df11ba90f811b183c7bfb0</saml:NameID>
 <saml:SubjectConfirmation Method="urn:oasis:names:tc:SAML:2.0:cm:bearer">
 <saml:SubjectConfirmationData Address="172.20.110.54"
 InResponseTo="_2caa671b2714f652ae758c4ac3cc99e5" NotOnOrAfter="2013-02-
 12T13:06:40.555Z"
 Recipient="https://localhost:1443/bdr-demo-sp-0.0.5-SNAPSHOT/saml/Response"/>
 </saml:SubjectConfirmation>
 </saml:Subject>
 <saml:Conditions NotBefore="2013-02-12T13:01:40.555Z" NotOnOrAfter="2013-02-
 12T13:06:40.555Z">
 <saml:AudienceRestriction>
 <saml:Audience>https://localhost:1443/Example-ServiceProvider</saml:Audience>
 </saml:AudienceRestriction>
 </saml:Conditions>
 <saml:AuthnStatement AuthnInstant="2013-02-12T13:01:40.553Z"
 SessionIndex="708b87254f6c2cdcb2fd1f57a190d6b431525211f6efb590bcf2b7faad5f9d6
 8">
 <saml:SubjectLocality Address="172.20.110.54"/>
 <saml:AuthnContext>
 <saml:AuthnContextDeclRef>urn:oasis:names:tc:SAML:2.0:ac:classes:SmartcardPKI</sa
 ml:AuthnContextDecIRef>
 </saml:AuthnContext>
 </saml:AuthnStatement>
 <saml:AttributeStatement>
 <saml:Attribute Name="Restrictedld">
 <saml:AttributeValue xmlns:xs="http://www.w3.org/2001/XMLSchema"
 xmlns:xsi=http://www.w3.org/2001/XMLSchema-instance
 xsi:type="xs:hexBinary">
 35433646453031413446423539434236353541344642354639433735433646454530314
 13446423530394345424336353935313531413446423546394337343
 </saml:AttributeValue>
 </saml:Attribute>
 <saml:Attribute Name="DocumentValidity">
 <saml:AttributeValue
 PreSharedKey="1b20ba000f9def917a39082642fe337e705950bc7566d81d958b810db46b
 4b16"
 Version="1"
 xmlns:eid="http://www.eid-service.de/eid/idcard/1.0"
 xmlns:xsi="http://www.w3.org/2001/XMLSchema-instance"
 xsi:type="eid:DocumentValidityResultType">
 <eid:ReferenceDate xmlns:xs="http://www.w3.org/2001/XMLSchema"
 xsi:type="xs:date">2013-02-12</eid:ReferenceDate>
 <eid:Status xmlns:xs="http://www.w3.org/2001/XMLSchema"
 xsi :type="xs:string">valid</eid:Status>
 </saml:AttributeValue>
 </saml:Attribute>
 </saml:AttributeStatement>
 </saml:Assertion>
```

Gemäß einer Ausführungsform kann für das Active Directory in dem Netzwerk, beispielsweise dem Computer-Netzwerk, eine Erweiterung vorteilhaft sein, welche die Authentifizierungsdaten von dem Identifikationsserver 105, beispielsweise dem elD-Server, abrufen kann. Der Identifikationsserver 105 bzw. der eID-Server kann dabei, gemäß einer Ausführungsform, intern oder extern eines Unternehmens und/oder einer Organisation betrieben werden. Gemäß einer Ausführungsform kann für die Login-Komponente des Betriebssystems ebenfalls eine Erweiterung vorteilhaft sein, welche die Kommunikation mit dem Identifikationsdokument 101 bzw. nPA übernehmen kann. Gemäß einer Ausführungsform kann für die Nutzer des Netzwerks, beispielsweise des Computer-Netzwerks, eine Selbsteinrichtungsfunktion bzw. eine Self-Service-Funktion vorteilhaft sein, über welche das Identifikationsdokument 101 bzw. der nPA für die Login-Nutzung registriert werden kann.

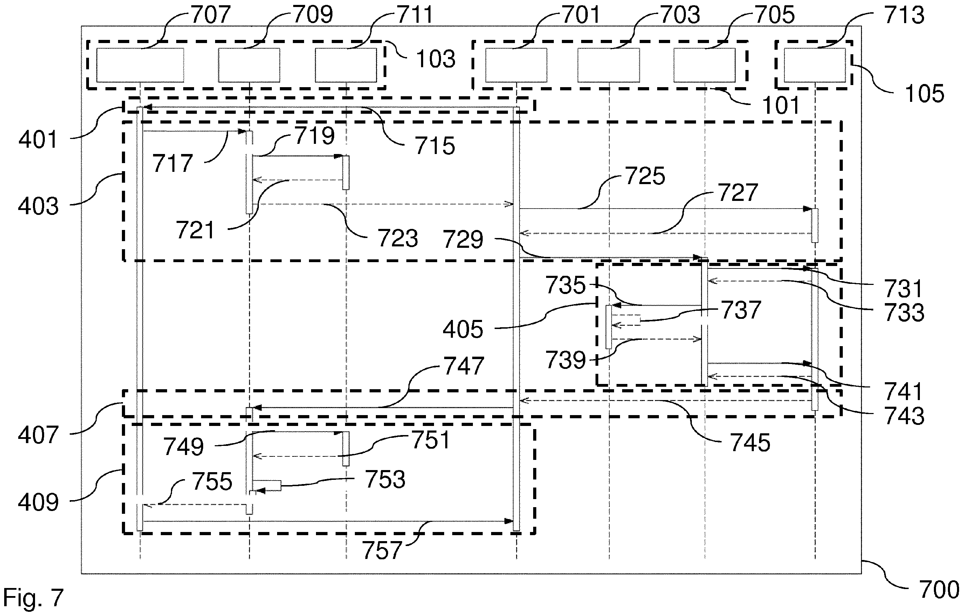

Fig. 7 zeigt ein Diagramm 700 eines Verfahrens zum Gewähren eines Nutzerzugriffs auf ein Kommunikationssystem 117 unter Verwendung eines elektronisch auslesbaren Identifikationsdokumentes 101 des Nutzers gemäß einer Ausführungsform. Das Verfahren entspricht einer "eID Sequence (SAML 2 Profile 1, POST-Binding)". Das Diagramm 700 umfasst das Identifikationsdokument 101, wobei das Identifikationsdokument 101 in diesem Ausführungsbeispiel eine "Client Windows Login Infrastructure" 701, ein "Client nPA Login Client Frontend" 703 sowie einen "Client eID Client" 705 umfasst. Das Diagramm 700 umfasst ferner einen Authentifizierungsserver 103, wobei der Authentifizierungsserver 103 in diesem Ausführungsbeispiel einen "Server Authentication Server (Active Directory)" 707, eine "Server nPA Login Component" 709 und einen "Server Connector" 711 umfasst. Das Diagramm 700 umfasst ferner den Identifizierungsserver 105, wobei der Identifizierungsserver 105 durch einen "eID Server" 713 gebildet ist.

Der Schritt 401 umfasst die Nachricht "nPALogin(user)" 715 zum Übertragen einer Zugriffsanfrage eines Nutzers für einen Zugriff auf ein Kommunikationssystem 117 zu einem Authentifizierungsserver 103 des Kommunikationssystems 117.

Der Schritt 403 umfasst die Nachricht "authenticate(user)" 717, die Nachricht "generateAuthnRequest(requestRID)" 719, die Nachricht ":authnRequest" 721, die Nachricht ":authnRequest" 723, die Nachricht "httpPost(authnRequest)" 725, die Nachricht ":eidClientParam" 727 sowie die Nachricht "invoke(eidClientParam)" 729 zum Übertragen einer Authentifizierungsanfrage von dem Authentifizierungsserver 103 zu dem Identifizierungsserver 105 ansprechend auf den Empfang der Zugriffsanfrage.

Der Schritt 405 umfasst die Nachricht "*[eCardApiMessage]:" 731, die Nachricht "*[eCardApiMessage]:" 733, die Nachricht "getEidPin()" 735, die Nachricht "requestEidPinFromllser()" 737, die Nachricht ":eidPin" 739, die Nachricht "*[eCardApiMessage]:" 741 sowie die Nachricht "*[eCardApiMessage]:" 743 zum Auslesen einer elektronischen Identifikation aus dem Identifikationsdokument 101 durch den Identifizierungsserver 105 ansprechend auf den Empfang der Authentifizierungsanfrage.

Der Schritt 407 umfasst die Nachricht ":samlResponse" 745 sowie die Nachricht ":samlResponse" 747 zum Übertragen der elektronischen Identifikation von dem Identifizierungsserver 105 zu dem Authentifizierungsserver 103.

Der Schritt 409 umfasst die Nachricht "interpretSamlResponse(samlResponse)" 749, die Nachricht ":restrictedId" 751, die Nachricht "lookupUser(restrictedId)" 753, die Nachricht "authenticationResult(authSuccess, userlnfo)" 755 sowie die Nachricht "authenticationResult(userInfo)" 757 zum Vergleichen der übermittelten elektronischen Identifikation mit einer vorgespeicherten elektronischen Identifikation durch den Authentifizierungsserver 103, um den Nutzerzugriff zu gewähren.

Die Nachrichten 715, 717, 719, 721, 723, 725, 727, 729, 731, 733, 735, 737, 739, 741, 743, 745, 747, 749, 751, 753, 755 und 757 können elektronische Nachrichten, Befehle, Kommandos, Schleifen und/oder Prozesse repräsentieren.

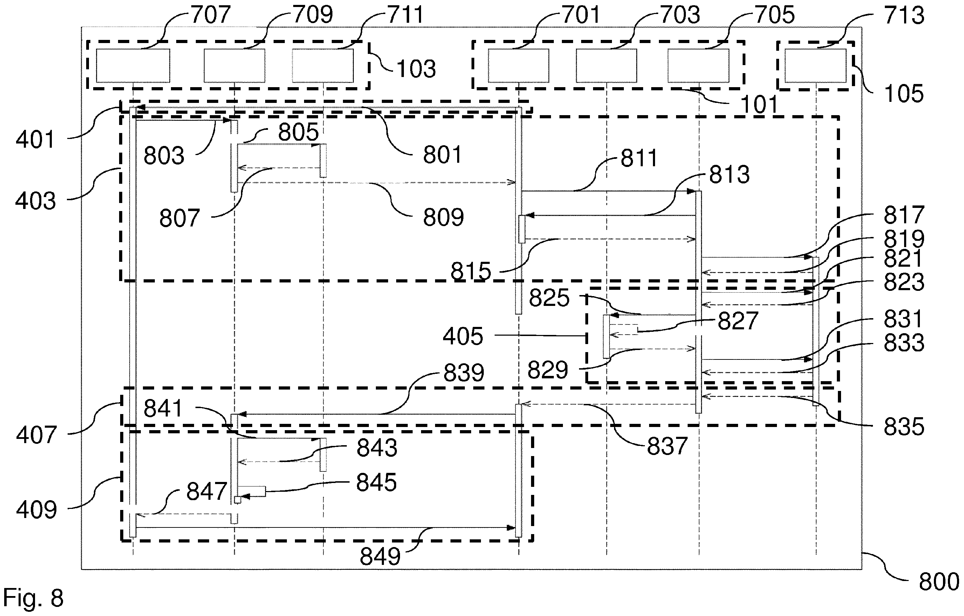

Fig. 8 zeigt ein Diagramm 800 eines Verfahrens zum Gewähren eines Nutzerzugriffs auf ein Kommunikationssystem 117 unter Verwendung eines elektronisch auslesbaren Identifikationsdokumentes 101 des Nutzers gemäß einer Ausführungsform. Das Verfahren entspricht einer "eID Sequence (SAML 2 Profile 2, REDIRECT-Binding)". Das Diagramm 800 umfasst das Identifikationsdokument 101, wobei das Identifikationsdokument 101 in diesem Ausführungsbeispiel eine "Client Windows Login Infrastructure" 701, ein "Client nPA Login Client Frontend" 703 sowie einen "Client eID Client" 705 umfasst. Das Diagramm 800 umfasst ferner einen Authentifizierungsserver 103, wobei der Authentifizierungsserver 103 in diesem Ausführungsbeispiel einen "Server Authentication Server (Active Directory)" 707, eine "Server nPA Login Component" 709 und einen "Server Connector" 711 umfasst. Das Diagramm 800 umfasst ferner den Identifizierungsserver 105, wobei der Identifizierungsserver 105 durch einen "eID Server" 713 gebildet ist.

Der Schritt 401 umfasst die Nachricht "nPALogin(user)" 801 zum Übertragen einer Zugriffsanfrage eines Nutzers für einen Zugriff auf ein Kommunikationssystem 117 zu einem Authentifizierungsserver 103 des Kommunikationssystems 117.

Der Schritt 403 umfasst die Nachricht "authenticate(user)" 803, die Nachricht "generateAuthnRequest(requestRID)" 805, die Nachricht ":authnRequest" 807, die Nachricht ":authnRequest" 809, die Nachricht "httpRedirect(samlRequestUrl)" 811, die Nachricht "httpRedirect()" 813, die Nachricht "httpRedirect(eidServerUrl, uthnRequest)" 815, die Nachricht "httpRedirect(authnRequest)" 817 sowie die Nachricht ":eidClientParam" 819 zum Übertragen einer Authentifizierungsanfrage von dem Authentifizierungsserver 103 zu dem Identifizierungsserver 105 ansprechend auf den Empfang der Zugriffsanfrage.

Der Schritt 405 umfasst die Nachricht "*[eCardApiMessage]:" 821, die Nachricht "*[eCardApiMessage]:" 823, die Nachricht "getEidPin()" 825, die Nachricht "requestEidPinFromUser()" 827, die Nachricht ":eidPin" 829, die Nachricht "*[eCardApiMessage]:" 831 sowie die Nachricht "*[eCardApiMessage]:" 833 zum Auslesen einer elektronischen Identifikation aus dem Identifikationsdokument 101 durch den Identifizierungsserver 105 ansprechend auf den Empfang der Authentifizierungsanfrage.

Der Schritt 407 umfasst die Nachricht "httpRedirect(consumerUrl,samlResponse)" 835, die Nachricht "httpRedirect(samlResponse)" 837 sowie die Nachricht ":samlResponse" 839 zum Übertragen der elektronischen Identifikation von dem Identifizierungsserver 105 zu dem Authentifizierungsserver 103.

Der Schritt 409 umfasst die Nachricht "interpretSamlResponse(samlResponse)" 841, die Nachricht ":restrictedId" 843, die Nachricht "lookupUser(restrictedId)" 845, die Nachricht "authenticationResult(authSuccess, userlnfo)" 847 sowie die Nachricht "authenticationResult(userInfo)" 849 zum Vergleichen der übermittelten elektronischen Identifikation mit einer vorgespeicherten elektronischen Identifikation durch den Authentifizierungsserver 103, um den Nutzerzugriff zu gewähren.

Die Nachrichten 801, 803, 805, 807, 809, 811, 813, 815, 817, 819, 821, 823, 825, 827, 829, 831, 833, 835, 837, 839, 841, 843, 845, 847 und 849 können elektronische Nachrichten, Befehle, Kommandos, Schleifen und/oder Prozesse repräsentieren.

Die Funktionalität der vorgenannten Ausführungsbeispiele kann sich an der elD-Funktionalität orientieren, die beispielsweise in der technischen Richtlinie BSI TR-03130 Version 1.6 näher erläutert ist. In dem dort beschriebenen Verfahren gibt es beispielsweise drei Teilnehmer: Den Nutzer, den Diensteanbieter und den IdentityProvider, der oftmals auch als eID-Provider bezeichnet wird. Der Nutzer kann eine Leistung vom Diensteanbieter anfordern. Der Diensteanbieter kann daraufhin eine Identifizierung des Nutzers unter Einbeziehung des IdentityProviders anfordern. Der IdentityProvider kann daraufhin eine End-to-End-verschlüsselte Verbindung zu einem Identifikationsdokument des Nutzers, beispielsweise zu einem neuen Personalausweis (nPA) des Nutzers, aufbauen. Zum Auslesen von Dateninhalten aus dem Identifikationsdokument, beispielsweise dem neuen Personalausweis, kann der IdentityProvider ein Zertifikat vorweisen. Zu diesem Zertifikat kann der Chip des neuen Personalausweises über ein entsprechendes kryptographisches Referenzstück verfügen, im einfachsten Fall über das identische Zertifikat, das bei der Produktion eingespeichert worden sein kann. Dieses kryptographische Gegenstück kann auch als Vertrauensanker bezeichnet werden.

Durch den Einsatz des Vertrauensankers kann erreicht werden, dass eine Man-in-the-Middle-Attack erschwert wird und nur der IdentityProvider auf die Daten des Chips zugreifen kann. Die ausgelesenen Daten kann der IdentityProvider dann temporär zur Verfügung halten, so dass der Diensteanbieter diese abholen kann und so erreichen kann, dass er es im Internet wirklich mit demjenigen zu tun hat, der er vorgibt zu sein. Gemäß einer Ausführungsform wird die Funktionalität des IdentityProviders durch den Identifizierungsserver bereitgestellt. Gemäß einer Ausführungsform wird die Funktionalität des Diensteanbieters durch den Authentifizierungsserver bereitgestellt.

Die Funktionalität der vorgenannten Ausführungsbeispiele kann sich ferner an der Funktionalität der Restricted Identification orientieren, die in der TR-3110 v. 2.05 beschrieben ist. Gemäß einer Ausführungsform entspricht der dort verwendete Ausdruck "Sector" einer Applikation. Die Restricted Identification kann ein kryptographisches Verfahren realisieren, das eine pseudonyme Anmeldung und eine pseudonyme Sperrung, beispielsweise für den Verlustfall des Identifikationsdokumentes bzw. nPA, ermöglichen kann und kann in seiner vollen Ausprägung auf einem zwei-stufigen Diffie-Hellman-Verfahren beruhen.

Das Verfahren kann dabei abgekürzt wie folgt durchgeführt werden. Der Nutzer möchte mittels seines Identifikationsdokumentes bzw. nPA in Kontakt mit einem speziellen Sector, gemäß einer Ausführungsform also einer bestimmten Applikation, treten. Hierzu kann sich das Identifikationsdokument bzw. der nPA den öffentlichen Schlüssel des Sectors zusenden lassen, den sogenannten PK_{Sector}. Außerdem kann sich das Identifikationsdokument bzw. der nPA vom Sector die Domänenparameter D zusenden lassen. Im klassischen Diffie-Hellman-Verfahren könnte der Parameter D beispielsweise aus den Parametern g und p gebildet werden. Die Parameter g und p können hierbei der Standardnotation des Diffie-Hellman-Verfahrens oder des Diffie-Hellman-Schlüsselaustausches entsprechen. Mit diesen erhaltenen Parametern kann das Identifikationsdokument bzw. der nPA auf kryptographischem Wege seinen privaten Schlüssel, gemäß einer Ausführungsform einen für genau diesen Zweck vorgesehenen seiner privaten Schlüssel, SK_{ID} verschränken bzw. verknüpfen und hieraus einen Hash-Wert bilden. Gemäß einer Ausführungsform kann der Vorgang im Identifikationsdokument bzw. nPA während der Berechnung des Pseudonyms bzw. der Restricted Identification durchgeführt werden. Gemäß einer Ausführungsform kann weniger relevant sein, wie dieser Wert berechnet wird. Gemäß einer Ausführungsform kann mehr relevant sein, dass der Wert vom Identifikationsdokument bzw. nPA erzeugt wird und vom Identifikationsdokument bzw. nPA über den Identifizierungsserver bzw. eID-Server zum Authentisierungsserver gelangt. Der so gebildete Hash-Wert kann dann die sogenannte Restricted Identification darstellen, die einzigartig für jedes Paar (nPA, Sector bzw. Applikation) sein kann. Ein Nutzer kann sich auf diese Weise bei verschiedenen Sectors registrieren, ohne dass von einem Sector zurückgeschlossenen werden kann, ob der Nutzer auch bei einem anderen Sector registriert ist. Die Zweistufigkeit des Verfahrens kann erst bei Betrachtung des Sperrens zutage treten.

Gemäß einer Ausführungsform kann also der neue Personalausweis bzw. nPA als Login-Karte bzw. SmartCard für einen Login und/oder ein Single Sign-On verwenden werden, wobei die Funktionalitäten bzw. Mechanismen des IdentityProviders sowie der Restricted Identification, beispielsweise gemäß der Richtlinie BSI TR-03130 Version 1.6, genutzt werden können.

Gemäß einer Ausführungsform ist die Erfindung also auf einen Single Sign-On mittels eines Identifikationsdokumentes, beispielsweise eines neuen Personalausweises, gerichtet. Der Login-Vorgang kann, gemäß einer Ausführungsform, durch einen Authentifizierungsserver ermöglicht werden, der auch als eID-Provider-Server oder Diensteanbieter bezeichnet wird. Bei einem Login mittels eines neuen Personalausweises bzw. nPA kann sich, gemäß einer Ausführungsform, am Arbeitsplatz des Nutzers ein Computer bzw. Rechner mit einem nPA-fähigen Kartenlesegerät befinden. Der Nutzer kann eine Sitzung und/oder einen Zugang von einem Authentifizierungsserver bzw. Login-Server anfordern, der im Sinne der eID-Funktionalität einem Diensteanbieters entspricht. Der Authentifizierungsserver bzw. Login-Server kann sich vergewissern, dass der Nutzer, der sich anmelden möchte, auch tatsächlich der Nutzer ist, der er angibt zu sein, indem er die Anfrage an einen Identifizierungsserver bzw. IdentityProvider weiterleitet. Das Verfahren kann dann, gemäß einer Ausführungsform, gemäß der vorgenannten elD-Funktionalität nach der Richtlinie BSI TR-03130 Version 1.6 weiter ablaufen. Im Erfolgsfall erhält der Nutzer schließlich die ersehnte Sitzung und/oder den ersehnten Zugriff bzw. Zugang. Gemäß einer Ausführungsform kann das Verfahren von jedem Betriebssystem, welches über einen Internetzugang verfügt, eingesetzt werden.

Gemäß einer Ausführungsform können Unternehmen einen Identifizierungsserver bzw. einen eID-Server an ihre Benutzerverwaltung anbinden, damit sich Nutzer mit ihren Identifikationsdokumenten, beispielsweise ihrem neuen Personalausweis bzw. nPA oder ihrem elektronischen Aufenthaltstitel bzw. eAT, an Computern bzw. PCs, analog zum Login mittels Login-Karte bzw. SmartCard, anmelden können.

### BEZUGSZEICHENLISTE

- 100: Kommunikationsszenario
- 101: Identifikationsdokument
- 103: Authentifizierungsserver
- 105: Identifizierungsserver
- 107: Kommunikationsnetzwerk
- 109: Computer
- 111: Kontaktloser Kartenleser
- 113: Authentifizierungsentität
- 115: Konnektorentität
- 117: Kommunikationssystem

- 200: Anmeldemaske
- 201: Textfeld
- 203: Auswahlfeld

- 300: Anmeldemaske
- 301: Textfeld
- 303: Eingabefeld
- 305: Bildschirmtastatur

- 400: Verfahren zum Gewähren eines Nutzerzugriffs auf ein Kommunikationssystem
- 401: Übertragen einer Zugriffsanfrage
- 403: Übertragen einer Authentifizierungsanfrage
- 405: Auslesen einer elektronischen Identifikation
- 407: Übertragen der elektronischen Identifikation
- 409: Vergleichen der übermittelten elektronischen Identifikation mit einer vorgespeicherten elektronischen Identifikation

- 501: Kommunikationsschnittstelle
- 503: Speicher
- 505: Prozessor
- 600: Anmeldevorgang
- 601 - 619: Schritt des Anmeldevorgangs

- 700: Diagramm
- 701: Client Windows Login Infrastructure
- 703: Client nPA Login Client Frontend
- 705: Client eID Client
- 707: Server Authentication Server (Active Directory)
- 709: Server nPA Login Component
- 711: Server Connector
- 713: eID Server
- 715 - 757: Nachricht

- 800: Diagramm
- 801 - 849: Nachricht

## Patentansprüche

1. Verfahren (400) zum Gewähren eines Nutzerzugriffs auf ein Kommunikationssystem (117) unter Verwendung eines elektronisch auslesbaren Identifikationsdokumentes (101) eines Nutzers, mit:
Übertragen eines öffentlichen kryptographischen Schlüssels eines Authentifizierungsservers (103) von dem Authentifizierungsserver (103) zu dem Identifikationsdokument (101);
Erzeugen einer elektronischen Identifikation durch eine Verknüpfung des öffentlichen kryptographischen Schlüssels des Authentifizierungsservers (103) und eines privaten kryptographischen Schlüssels des Identifikationsdokumentes (101) durch das Identifikationsdokument (101);
Speichern der erzeugten elektronischen Identifikation, um eine vorgespeicherte elektronische Identifikation zu erhalten;
Übertragen (401) einer Zugriffsanfrage des Nutzers für einen Zugriff auf das Kommunikationssystem (117) zu dem Authentifizierungsserver (103) des Kommunikationssystems (117);
Ansprechend auf den Empfang der Zugriffsanfrage, Übertragen (403) einer Authentifizierungsanfrage von dem Authentifizierungsserver (103) zu einem Identifizierungsserver (105);
Ansprechend auf den Empfang der Authentifizierungsanfrage, Auslesen (405) einer elektronischen Identifikation aus dem Identifikationsdokument (101) durch den Identifizierungsserver (105), wobei die elektronische Identifikation durch das Identifikationsdokument (101) unter Verwendung des öffentlichen kryptographischen Schlüssels des Authentifizierungsservers (103) erzeugt wird;
Übertragen (407) der elektronischen Identifikation von dem Identifizierungsserver (105) zu dem Authentifizierungsserver (103); und
Vergleichen (409) der übermittelten elektronischen Identifikation mit der vorgespeicherten elektronischen Identifikation durch den Authentifizierungsserver (103), um den Nutzerzugriff zu gewähren,
wobei die Zugriffsanfrage eine Login-Anfrage ist,
wobei das Kommunikationssystem (117) ein Computerbetriebssystem ist.

2. Verfahren (400) nach Anspruch 1, mit:
Übertragen des öffentlichen kryptographischen Schlüssels des Authentifizierungsservers (103) zu dem Identifizierungsserver (105) oder Auslesen des öffentlichen kryptographischen Schlüssels des Authentifizierungsservers (103) aus einem Speicher des Identifizierungsservers (105); und
Übertragen des öffentlichen kryptographischen Schlüssels des Authentifizierungsservers (103) von dem Identifizierungsserver (105) zu dem Identifikationsdokument (101).

3. Verfahren (400) nach einem der vorstehenden Ansprüche, wobei der Nutzerzugriff bei einer Übereinstimmung zwischen der übermittelten elektronischen Identifikation und der vorgespeicherten elektronischen Identifikation gewährt wird, oder wobei der Nutzerzugriff bei einem Mangel an Übereinstimmung zwischen der übermittelten elektronischen Identifikation und der vorgespeicherten elektronischen Identifikation verwehrt wird.

4. Verfahren (400) nach einem der vorstehenden Ansprüche, wobei die übermittelte elektronische Identifikation mit einer Mehrzahl von vorgespeicherten elektronischen Identifikationen unterschiedlicher Identifikationsdokumente (101) verglichen wird.

5. Verfahren (400) nach einem der vorstehenden Ansprüche, wobei die jeweilige elektronische Identifikation eine Restricted Identification ist.

6. Verfahren (400) gemäß einem der vorstehenden Ansprüche, wobei der Identifizierungsserver (105) ein eID-Server ist.

7. Authentifizierungsserver (103) zum Gewähren eines Nutzerzugriffs auf ein Kommunikationssystem (117) unter Verwendung eines elektronisch auslesbaren Identifikationsdokumentes (101) des Nutzers, mit:
einer Kommunikationsschnittstelle (501) zum Empfangen einer Zugriffsanfrage des Nutzers für einen Zugriff auf das Kommunikationssystem (117), wobei die Kommunikationsschnittstelle (501) ausgebildet ist, ansprechend auf den Empfang der Zugriffsanfrage, eine Authentifizierungsanfrage über ein Kommunikationsnetzwerk (107) auszusenden, und wobei die Kommunikationsschnittstelle (501) ausgebildet ist, ansprechend auf das Aussenden der Authentifizierungsanfrage eine elektronische Identifikation über das Kommunikationsnetzwerk (107) zu empfangen;
einem Speicher (503) zum Bereitstellen einer vorgespeicherten elektronischen Identifikation; und
einem Prozessor (505), welcher ausgebildet ist, die empfangene elektronische Identifikation mit der vorgespeicherten elektronischen Identifikation zu vergleichen, um den Nutzerzugriff zu gewähren,
wobei die Zugriffsanfrage eine Login-Anfrage ist,
wobei das Kommunikationssystem (117) ein Computerbetriebssystem ist,
wobei die Kommunikationsschnittstelle (501) ausgebildet ist, eine elektronische Identifikation des Identifikationsdokumentes (101) zu empfangen, wobei der Speicher (503) ausgebildet ist, die empfangene elektronische Identifikation zu speichern, um die vorgespeicherte elektronische Identifikation zu erhalten,
wobei die Kommunikationsschnittstelle (501) ausgebildet ist, einen öffentlichen kryptographischen Schlüssel des Authentifizierungsservers (103) an das Identifikationsdokument (101) auszusenden, und, ansprechend hierauf, die elektronische Identifikation des Identifikationsdokumentes (101) zu empfangen.

8. Authentifizierungsserver (103) nach Anspruch 7, wobei der Prozessor (505) ausgebildet ist, den Nutzerzugriff bei Übereinstimmung der empfangenen elektronischen Identifikation und der vorgespeicherten elektronischen Identifikation zu gewähren.

9. Authentifizierungsserver (103) nach einem der Ansprüche 7 oder 8, der ein Domänen-Kontroller eines Kommunikationssystems (117) ist.

10. Computerprogramm mit einem Programmcode zum Ausführen des Verfahrens (400) nach einem der Ansprüche 1 bis 6, wenn der Programmcode auf einem Computer (109) ausgeführt wird.

## Claims

1. Method (400) for granting a user access to a communication system (117) using an electronically readable identification document (101) of a user, which method comprises:
transmitting a public cryptographic key of an authentication server (103) from the authentication server (103) to the identification document (101);
generating an electronic identification by linking the public cryptographic key of the authentication server (103) and a private cryptographic key of the identification document (101), this being carried out by the identification document (101);
storing the generated electronic identification in order to obtain a pre-stored electronic identification;
transmitting (401) to the authentication server (103) of the communication system (117) an access request of the user for access to the communication system (117);
in response to receiving the access request, transmitting (403) an authentication request from the authentication server (103) to an identification server (105);
in response to receiving the authentication request, reading (405) an electronic identification from the identification document (101), this being carried out by the identification server (105), wherein the electronic identification is generated by the identification document (101) using the public cryptographic key of the authentication server (103);
transmitting (407) the electronic identification from the identification server (105) to the authentication server (103); and
comparing (409) the transmitted electronic identification with the pre-stored electronic identification in order to grant the user access, said comparison being carried out by the authentication server (103),
wherein the access request is a login request,
wherein the communication system (117) is a computer operating system.

2. Method (400) according to claim 1, which comprises:
transmitting the public cryptographic key of the authentication server (103) to the identification server (105) or reading the public cryptographic key of the authentication server (103) from a memory of the identification server (105); and
transmitting the public cryptographic key of the authentication server (103) from the identification server (105) to the identification document (101).

3. Method (400) according to one of the preceding claims, wherein the user access is granted if the transmitted electronic identification and the pre-stored electronic identification match, or wherein the user access is denied if the transmitted electronic identification and the pre-stored electronic identification do not match.

4. Method (400) according to one of the preceding claims, wherein the transmitted electronic identification is compared with a plurality of pre-stored electronic identifications of different identification documents (101).

5. Method (400) according to one of the preceding claims, wherein the respective electronic identification is a Restricted Identification.

6. Method (400) according to one of the preceding claims, wherein the identification server (105) is an eID server.

7. Authentication server (103) for granting a user access to a communication system (117) using an electronically readable identification document (101) of the user, said authentication server comprising:
a communication interface (501) for receiving an access request of the user for access to the communication system (117), wherein the communication interface (501) is configured to send an authentication request via a communication network (107) upon receipt of the access request, and wherein the communication interface (501) is configured to receive an electronic identification via the communication network (107) in response to sending the authentication request;
a memory (503) for providing a pre-stored electronic identification; and
a processor (505) which is configured to compare the received electronic identification with the pre-stored electronic identification in order to grant the user access,
wherein the access request is a login request,
wherein the communication system (117) is a computer operating system,
wherein the communication interface (501) is configured to receive an electronic identification of the identification document (101), wherein the memory (503) is configured to store the received electronic identification in order to obtain the pre-stored electronic identification,
wherein the communication interface (501) is configured to send a public cryptographic key of the authentication server (103) to the identification document (101) and, in response thereto, to receive the electronic identification of the identification document (101).

8. Authentication server (103) according to claim 7, wherein the processor (505) is configured to grant the user access if the received electronic identification and the pre-stored electronic identification match.

9. Authentication server (103) according to one of claims 7 or 8, which is a domain controller of a communication system (117).

10. Computer program comprising a program code for executing the method (400) according to one of claims 1 to 6 when the program code is executed on a computer (109).

## Revendications

1. Procédé (400) d'autorisation d'un accès d'utilisateur à un système de communication (117) au moyen d'un document d'identification (101) d'un utilisateur lisible par voie électronique, comprenant :
la transmission d'une clé cryptographique publique d'un serveur d'authentification (103) du serveur d'authentification (103) au document d'identification (101) ;
la génération par le document d'identification (101) d'une identification électronique par corrélation de la clé cryptographique publique du serveur d'authentification (103) et d'une clé cryptographique privée du document d'identification (101) ;
la sauvegarde de l'identification électronique générée, afin de recevoir une identification électronique préalablement mémorisée ;
la transmission (401) au serveur d'authentification (103) du système de communication (117) d'une demande de l'utilisateur pour un accès au système de communication (117) ;
en réaction à la réception de la demande d'accès, la transmission (403) d'une demande d'authentification du serveur d'authentification (103) à un serveur d'identification (105) ;
en réaction à la réception de la demande d'authentification, l'extraction (405) d'une identification électronique du document d'identification (101) par le serveur d'identification (105), ladite identification électronique étant générée par le document d'identification (101) au moyen de la clé cryptographique publique du serveur d'authentification (103) ;
la transmission (407) de l'identification électronique du serveur d'identification (105) au serveur d'authentification (103) ; et
la comparaison (409) par le serveur d'authentification (103) de l'identification électronique transmise avec l'identification électronique préalablement mémorisée, pour autoriser l'accès à l'utilisateur,
la demande d'accès étant une demande d'ouverture de session,
le système de communication (117) étant un système d'exploitation d'ordinateur.

2. Procédé (400) selon la revendication 1, comprenant :
la transmission de la clé cryptographique publique du serveur d'authentification (103) au serveur d'identification (105) ou l'extraction de la clé cryptographique publique du serveur d'authentification (103) d'une mémoire du serveur d'identification (105) ; et
la transmission de la clé cryptographique publique du serveur d'authentification (103) du serveur d'identification (105) au document d'identification (101).

3. Procédé (400) selon l'une des revendications précédentes, où l'accès d'utilisateur est autorisé en cas de concordance entre l'identification électronique communiquée et l'identification électronique préalablement mémorisée, ou où l'accès d'utilisateur est refusé en cas de défaut de concordance entre l'identification électronique communiquée et l'identification électronique préalablement mémorisée.

4. Procédé (400) selon l'une des revendications précédentes, où l'identification électronique communiquée est comparée avec une pluralité d'identifications électroniques préalablement mémorisées de différents documents d'identification (101).

5. Procédé (400) selon l'une des revendications précédentes, où chaque identification électronique est une identification restreinte.

6. Procédé (400) selon l'une des revendications précédentes, où le serveur d'identification (105) est un serveur eID.

7. Serveur d'authentification (103) pour l'autorisation d'un accès d'utilisateur à un système de communication (117) au moyen d'un document d'identification (101) d'un utilisateur lisible par voie électronique, comprenant :
une interface de communication (501) pour la réception d'une demande de l'utilisateur pour un accès au système de communication (117), l'interface de communication (501) étant prévue pour émettre une demande d'authentification via un réseau de communication (107) en réaction à la réception de la demande d'accès, et l'interface de communication (501) étant prévue pour recevoir une identification électronique via le réseau de communication (107) en réaction à l'émission de la demande d'authentification ;
une mémoire (503) pour la mise à disposition d'une identification électronique préalablement mémorisée; et
un processeur (505), prévu pour comparer l'identification électronique reçue avec l'identification électronique préalablement mémorisée, pour autoriser l'accès à l'utilisateur,
la demande d'accès étant une demande d'ouverture de session,
le système de communication (117) étant un système d'exploitation d'ordinateur,
l'interface de communication (501) étant prévue pour recevoir une identification électronique du document d'identification (101), la mémoire (503) étant prévue pour sauvegarder l'identification électronique reçue afin d'obtenir l'identification électronique préalablement mémorisée,
l'interface de communication (501) étant prévue pour adresser une clé cryptographique publique du serveur d'authentification (103) au document d'identification (101), et pour recevoir en réaction l'identification électronique du document d'identification (101).

8. Serveur d'authentification (103) selon la revendication 7, où le processeur (505) est prévu pour autoriser l'accès à l'utilisateur en cas de concordance de l'identification électronique reçue et de l'identification électronique préalablement mémorisée.

9. Serveur d'authentification (103) selon la revendication 7 ou la revendication 8, lequel est un contrôleur de domaine d'un système de communication (117).

10. Programme informatique comprenant un code de programme pour l'exécution du procédé (400) selon l'une des revendications 1 à 6 quand le code de programme est exécuté sur un ordinateur (109).
